# EUROPÄISCHE PATENTSCHRIFT

(11) **EP 2 904 356 B1**
(45) Veröffentlichungstag und Bekanntmachung des Hinweises auf die Patenterteilung: **01.04.2020**
(21) Anmeldenummer: 13763088.5
(22) Anmeldetag: 19.09.2013
(51) Int. Cl.: G01F 1/58

(54) **FÜLLSTANDSÜBERWACHUNGSSYSTEM UND DURCHFLUSSMESSGERÄT**
FILL LEVEL MONITORING SYSTEM AND FLOW METER
SYSTÈME DE SURVEILLANCE DE NIVEAU DE REMPLISSAGE ET APPAREIL DE MESURE D'ÉCOULEMENT

(30) Priorität: 01.10.2012 DE 102012109308
(43) Veröffentlichungstag der Anmeldung: 12.08.2015
(60) Teilanmeldung: 19216077.8
(73) Patentinhaber: Endress+Hauser Flowtec AG, 4153 Reinach (BL) (CH)
(72) Erfinder: VOIGT, Frank, 79576 Weil am Rhein (DE); WOHLGEMUTH, Werner, 4206 Seewen (CH); BÄHR, Günther, 4106 Therwil (CH)
(74) Vertreter: Andres, Angelika Maria
(86) Internationale Anmeldenummer: PCT/EP2013/069438
(87) Internationale Veröffentlichungsnummer: WO 2014/053324

(56) Entgegenhaltungen:
- EP-A2- 1 387 148
- DE-A1-102005 005 295
- DE-A1-102007 005 670
- DE-A1-102010 001 993
- US-A- 5 503 026

## Beschreibung

Die vorliegende Erfindung betrifft ein Füllstandsüberwachungssystem nach dem Oberbegriff des Anspruchs 1 und ein Durchflussmessgerät nach dem Oberbegriff des Anspruchs 13.

Füllstandsüberwachungssysteme für Durchflussmessgeräte sind bislang bereits bekannt. Dabei wird eine sogenannte Messstoffüberwachungselektrode (MSÜ-Elektrode) bei horizontalem Einbau und Betrachtung des Querschnittes des Messrohres am obersten Punkt eines Messrohres angeordnet. Durch Bestimmung des elektrischen Widerstandes oder der Leitfähigkeit zwischen der MSÜ-Elektrode und dem Medium, abgeleitet z.B.über eine Bezugselektrode oder einen metallischen Prozessanschluss in Kontakt mit dem metallischen Gehäuse des Durchflussmessgerätes wird der Kontakt zwischen MSÜ-Elektrode und Medium und somit die vollständige Befüllung des Rohres überwacht. Dabei weist das Medium gegenüber Luft stets eine höhere Leitfähigkeit auf. Sinkt die Leitfähigkeit unter eine vorgegebene Grenze, so wird eine teilweise Befüllung detektiert. Die Grenze ist unter anderem abhängig von der spezifischen Leitfähigkeit des Mediums, von der Nennweite, von der Abmessung und Position der MSÜ-Elektrode sowie von Eigenschaften der Messrohrauskleidung. Daher ist je nach Applikation ein Abgleich zur Bestimmung der Grenze erforderlich.

Darüber hinaus sind Temperatursensoren z.B. von der DE 10 2010 001 993 bekannt, welche in einem Durchflussmessgerät eingesetzt werden. Bereits bekannt sind dabei die DE 10 2009 0046 653 A1, die EP 1 387 148 A2 und die DE 10 2007 005 670 A1, bei denen Temperatursensoren in Messelektroden eines MID eingesetzt und genutzt werden. Diese Sensoren dienen allerdings nicht der Füllstandsüberwachung für hohe Befüllungsgrade sondern geben lediglich ein Warnsignal ab, wenn bei horizontalem Einbau und horizontaler Verbindungsachse der Messelektroden der Befüllungsgrad im Rohr unter 50% sinkt. Eine Füllstandsüberwachung könnte erreicht werden, wenn die Verbindungsachse der Messelektroden in der Installation vertikal orientiert ist. Nachteilig ist dabei jedoch die Beeinflussung der Messperformance durch Gasbläschen im Medium, die entlang der inneren Oberseite des Messrohres entlang strömen.

Ausgehend von diesem Stand der Technik ist es nunmehr Aufgabe der vorliegenden Erfindung ein Füllstandsüberwachungssystem bereitzustellen, welches die Ermittlung weiterer physikalischer Größen eines Messsystems erlaubt und zugleich über einen kompakten Aufbau verfügt.

Die Erfindung löst diese Aufgabe durch ein Füllstandsüberwachungssystem mit den Merkmalen des Anspruchs 1 und durch ein Durchflussmessgerät mit den Merkmalen des Anspruchs 13.

Erfindungsgemäß weist ein Füllstandsüberwachungssystem zumindest eine Elektrode zur Überwachung des Füllstandes eines Mediums in einem Rohr auf, wobei die Elektrode zudem einen integrierten Temperatursensor aufweist.

Der in der Elektrode integrierte Temperatursensor ermöglicht die Ermittlung der Mediumstemperatur in einem Rohr. Dies kann vorzugsweise ein Messrohr oder ein Prozessanschluss in einem Durchflussmessgerät sein. Zudem kann die Erfindung auch zur Füllstandsüberwachung überall dort eingesetzt werden, bei denen die zusätzliche Ermittlung der Mediumstemperatur relevant sein könnte, beispielsweise bei leitenden Medien wie beispielsweise Wasser, Getränke, Lebensmittel, Reinigungsmittel oder Impfstofflösungen.

Das Füllstandsüberwachungssystem weist eine Auswerteeinheit auf, welche ausgebildet ist zur Überwachung des Befüllungsgrades des Rohres und welche Auswerteeinheit ein Warnsignal aussendet, sofern der Befüllungsgrad einen Grenzwert, vorzugsweise einen Befüllungsgrad von 55% des Rohrinnendurchmessers, unterschreitet. Für alle Befüllungsgrade unterhalb von 55% wird in jedem Fall ein Warnsignal ausgegeben.

Eine besonders bevorzugte Elektrodenform für eine verbesserte Temperaturansprechzeit ist gegeben, sofern die Elektrode einen Elektrodenkopf aufweist, welcher Elektrodenkopf eine Stirnfläche mit einen Mittelpunkt aufweist und zumindest einen ersten dazu radial beabstandeten Bereich, wobei zumindest der erste Bereich einen ersten in Mediumsrichtung gewölbten Kreisbogen oder eine in Mediumsrichtung gewölbte Parabel definiert. Dabei ist der Elektrodenkopf rotationssymmetrisch aufgebaut mit einer Längsachse. Dabei erstreckt sich der erste Bereich über einen radial zum Mittelpunkt verlaufenden Abschnitt von zumindest 2%, vorzugsweise 4%, insbesondere 10% des Durchmessers des Elektrodenkopfes.

Das Temperaturansprechverhalten kann weiter verbessert werden durch die vorteilhafte Anordnung des Mittelpunktes der Stirnfläche in einem Abstand in Mediumsrichtung von dem Kreisbogen oder der Parabel. Dieser Abstand beträgt vorzugsweise mehr als 1% des Durchmessers des Elektrodenkopfes, insbesondere mehr als 5% des Durchmessers des Elektrodenkopfes, insbesondere mehr als 8% des Durchmessers des Elektrodenkopfes.

Besonders bevorzugt kann bereits ein Warnsignal abgegeben werden, wenn der Befüllungsgrad unter 75%, vorzugsweise 95 %, insbesondere 98% des Rohrinnendurchmessers fällt. Dies setzt allerdings eine Positionierung einer MSÜ-Elektrode oder einer Bezugselektrode im oberen Bereich des Rohres voraus.

Zudem ist es möglich durch Kombination einer Füllstandsüberwachung und Temperaturmessung, nicht nur eine Unterschreitung des Füllstands mit Relevanz für die Durchflussmessung anzuzeigen, sondern insbesondere zu detektieren, dass die Temperaturelektrode nicht mehr im Kontakt mit dem Medium ist. Ist dies der Fall so kann eine größere Messabweichung auftreten, welche in Form einer Warnmeldung an den Nutzer weitergegeben werden kann. Somit profitiert die Temperaturmessfunktion, von der Füllstandsüberwachung.

Vorteilhafte Ausgestaltungen der Erfindung sind Gegenstand der Unteransprüche.

Das Füllstandsüberwachungssystem erfolgt vorteilhaft unter Ausnutzung der Leitfähigkeit des Mediums. Dabei weist das Füllstandsüberwachungssystem zumindest eine Schaltung zum Anlegen eines Spannungsprofils zwischen einer ersten und einer zweiten Elektrode auf. Das Medium stellt die Kontaktierung zwischen beiden Elektroden her und schließt bei Kontakt mit den beiden Elektroden somit den Stromkreis. Bei unzureichendem Befüllungsgrad ist dies nicht der Fall, dann wird ein Warnsignal ausgegeben.
In einer bevorzugten Ausführungsvariante weist sowohl die erste und die zweite Elektrode einen integrierten Temperatursensor auf. Dies sind vorzugsweise sowohl die Bezugselektrode als auch die MSÜ-Elektrode. Dadurch kann die Temperatur an zwei Orten bestimmt werden. Bei unterschiedlicher Temperatur können unter bestimmten Bedingungen Rückschlüsse über das zeitabhängige Strömungsprofil bei vollständiger Rohrbefüllung hergeleitet werden. Alternativ können die Bezugselektroden auch einen unvollständigen Befüllungsgrad bestätigen bei einem ausreichenden Temperaturunterschied zwischen dem Medium und der Umgebungstemperatur.

Besonders vorteilhaft ist eine Ausgestaltungsvariante eines Elektrodenkopfes bei der der Verlauf der Stirnfläche in radialer Richtung zum Mittelpunkt einen Punkt erreicht, ab welchem ein Zuwachs in Mediumsrichtung in einer positiven Steigung erfolgt, wobei der Abstand dieses Punktes zum Mittelpunkt in längsaxialer Richtung größer ist als die Wandstärke des Elektrodenkopfes entlang der Längsachse am Mittelpunkt der Elektrode. Durch dieses Längen- zum Wandstärkenverhältnis wird ein besonders schnelles Ansprechen auf Temperaturänderungen erreicht.

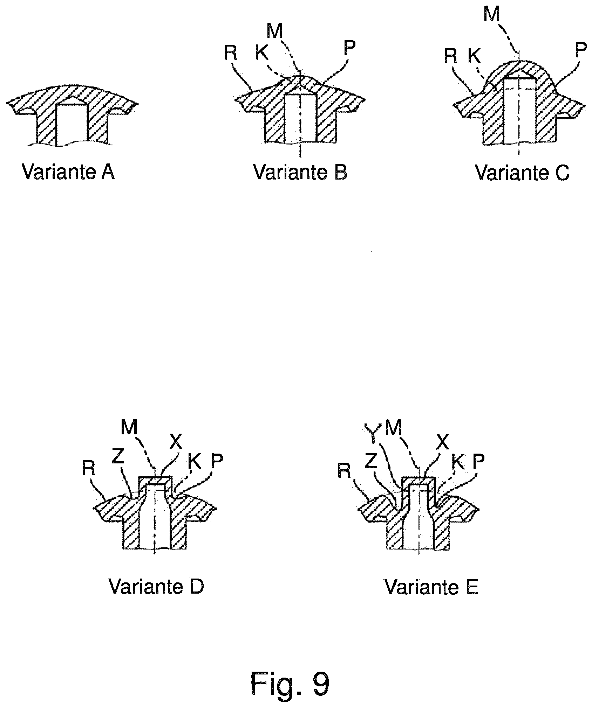

Mediumsrichtung bedeutet in diesem Zusammenhang, dass sofern der Temperatursensor senkrecht in einem Rohr mit einer Rohrachse oder einem anderen zylindrischen Behältnis mit einer Längsachse angeordnet ist, dass die Mediumsrichtung orthogonal zu dieser Längsachse in Richtung des Rohr- bzw. Behältnisinnenraumes verläuft. Die Mediumsrichtung verläuft somit zum Medium hin. Eine besonders vorteilhafte Formgestaltung ist dabei gegeben, sofern ein stirnseitiger Abschnitt des Elektrodenkopfes als zylindrische Ausformung ausgebildet ist, deren Zylinderwandung parallel zur Längsachse der Elektrode verläuft - hierzu wird bereits vorab auf die Ergebnisse von Fig. 9 der Zeichnungen verwiesen.

Dabei ist die Auswerteeinheit so ausgelegt, dass sowohl die Bestimmung der Mediumstemperatur als auch des Belagszustandes der Elektrode als auch die Bestimmung des Befüllungszustandes des Rohres zu ermöglicht wird. Eine gesonderte Auswerteeinheit ist folglich nicht nötig, was zu einer Verringerung des Platzbedarfs des Füllstandsüberwachungssystems führt. Zusätzlich kann durch Kombination einer Füllstandsüberwachung und Temperaturmessung, nicht nur eine Unterschreitung des Füllstands mit Relevanz für die Durchflussmessung angezeigt werden, sondern insbesondere detektiert werden, dass die Temperaturelektrode nicht mehr im Kontakt mit dem Medium ist. Ist dies der Fall so kann eine größere Messabweichung auftreten, welche in Form einer Warnmeldung an den Nutzer weitergegeben werden kann. Somit profitiert die Temperaturmessfunktion, von der Füllstandsüberwachung.

Insbesondere ist es sehr vorteilhaft möglich, durch Auswertung des Signals der MSÜ-Elektrode zu erkennen, ob der in der MSÜ-Elektrode integrierte Temperaturfühler noch in direktem Kontakt mit dem Medium ist. Direkter Kontakt bedeutet hier, dass die Elektrode, in der der Temperaturfühler mit direktem Kontakt zur Elektrode integriert ist, belagsfrei ist und die elektrisch leitfähigen Bereiche der Elektrode außerhalb der Auskleidung in Kontakt mit dem Medium sind. Durch eine elektrisch isolierende und thermisch leitfähige Beschichtung eines Teiles der Elektrode ist es möglich, dass die MSÜ bereits anspricht, sobald die bestimmungsgemäß mit dem Medium in Kontakt stehende Elektrodenoberfläche zu weniger als 20%, vorteilhaft zu weniger als 50%, insbesondere zu weniger als 90% mit dem Medium in Kontakt ist. Sollte die Elektrode in geringerem Mass oder insbesondere nicht mehr mit dem Medium in direktem Kontakt stehen, kann dies zu einer höheren Messabweichung der Temperatur führen, was durch Auswertung der Füllstands- und Belagserkennungfunktion erkannt werden kann. Bei Erkennung dieses Falles ist es möglich, in der gemeinsamen Auswerteeinheit entsprechende Maßnahmen vorzusehen, insbesondere eine Warnmeldung bezüglich der Genauigkeit der Temperaturmessung auszugeben.

Das Füllstandsüberwachungssystem kann in vorteilhafter Weise derart ausgestaltet sein, dass die Auswerteeinheit ein Anzeigenelement aufweist zur Anzeige der Mediumstemperatur und/oder des Belagszustandes der Elektrode und zur Anzeige des Befüllungszustandes des Rohres. Diese Anzeigeneinheit ermöglicht eine einfache Ablesbarkeit und ggf. eine Vor-Ort-Überwachung, - Steuerung oder -Regelung der Prozessbedingungen einer Anlage anhand der an der Elektrode ermittelten Parameter.

Es ist von Vorteil, wenn ein erstes stirnseitiges Teilsegment des Sensorkopfes eine elektrisch-isolierende Beschichtung aufweist und ein zweites stirnseitiges Teilsegment beschichtungsfrei ausgebildet ist. Dabei ist ragt das erste stirnseitige Teilsegment vorzugsweise weiter in das Rohr hinein als das zweite stirnseitige Teilsegment. Dabei zeigt der Sensor einen ausreichenden Befüllungsgrad in Abhängigkeit davon an, wie weit der Sensor - respektive der Sensorkopf - in das Rohr hineinragt. Um ein Warnsignal schon frühzeitig, also auch bei höheren Befüllungsgraden zu ermöglichen, weist der Sensorkopf für das erste Teilsegment eine isolierende Beschichtung auf. Das bedeutet, dass sobald das Medium unterhalb der Grenze der Beschichtung sinkt, bereits ein Warnsignal ausgelöst wird.

Erfindungsgemäß weist ein Durchflussmessgerät ein Messrohr und eine Vorrichtung zur Ermittlung der Durchflussgeschwindigkeit und/oder des Volumendurchflusses eines Mediums in dem Messrohr auf, wobei das Durchflussmessgerät ein Füllstandsüberwachungssystem gemäß einem der Ansprüche 1-12, aufweist, welches Füllstandsüberwachungssystem zumindest eine Elektrode mit einem integrierten Temperatursensor aufweist, welche Elektrode im Messrohr oder einem an das Messrohr angeschlossenen Prozessanschluss angeordnet ist.

Das Füllstandsüberwachungssystem weist eine Auswerteeinheit auf, welche ausgebildet ist zur Überwachung des Befüllungsgrades des Rohres und welche Auswerteeinheit ein Warnsignal aussendet, sofern der Befüllungsgrad einen Grenzwert, vorzugsweise einen Befüllungsgrad von 55% des Rohrinnendurchmessers, unterschreitet. Besonders bevorzugt kann bereits ein Warnsignal abgegeben werden, wenn der Befüllungsgrad unter 80% des Rohrinnendurchmessers, vorzugsweise unter 95% des Rohrinnendurchmessers, insbesondere unter 98% des Rohrinnendurchmessers fällt. Hierfür erfolgt vorzugsweise eine Positionierung einer MSÜ-Elektrode oder einer Bezugselektrode im oberen Bereich des Rohres bei horizontaler Einbaulage.

Das erfindungsgemäße Durchflussmessgerät kann insbesondere als ein magnetisch-induktives Durchflussmessgerät ausgebildet sein, wobei zusätzlich zu den im Messrohr angeordneten Messelektroden zumindest eine zum Füllstandsüberwachungssystem zugehörige Elektrode angeordnet ist.

Nachfolgend wird die Erfindung anhand einiger bevorzugter Ausführungsbeispiele unter Zuhilfenahme der nachfolgenden Figuren näher beschrieben. Es zeigen:
- Fig.1: Anordnung einer ersten erfindungsgemäßen Elektrode im Messrohr eines magnetisch-induktiven Durchflussmessgerätes;
- Fig.2: eine Detailansicht der ersten erfindungsgemäßen Elektrode im eingebauten Zustand;
- Fig.3: Detailansicht der ersten erfindungsgemäßen Elektrode im ausgebauten Zustand;
- Fig.4: Anordnung einer zweiten erfindungsgemäßen Elektrode im Messrohr eines magnetisch-induktiven Durchflussmessgerätes;
- Fig.5: Detailansicht der zweiten erfindungsgemäßen Elektrode im eingebauten Zustand;
- Fig.6: Detailansicht des Elektrodenkörpers der zweiten erfindungsgemäßen Elektrode im ausgebauten Zustand;
- Fig.7: Teilansicht einer dritten erfindungsgemäßen Elektrode;
- Fig.8: Teilansicht einer vierten erfindungsgemäßen Elektrode; und
- Fig.9: schematische Darstellung mehrerer weiterer Varianten von erfindungsgemäßen Elektroden und ein Diagramm zum Temperaturansprechverhalten dieser Varianten.

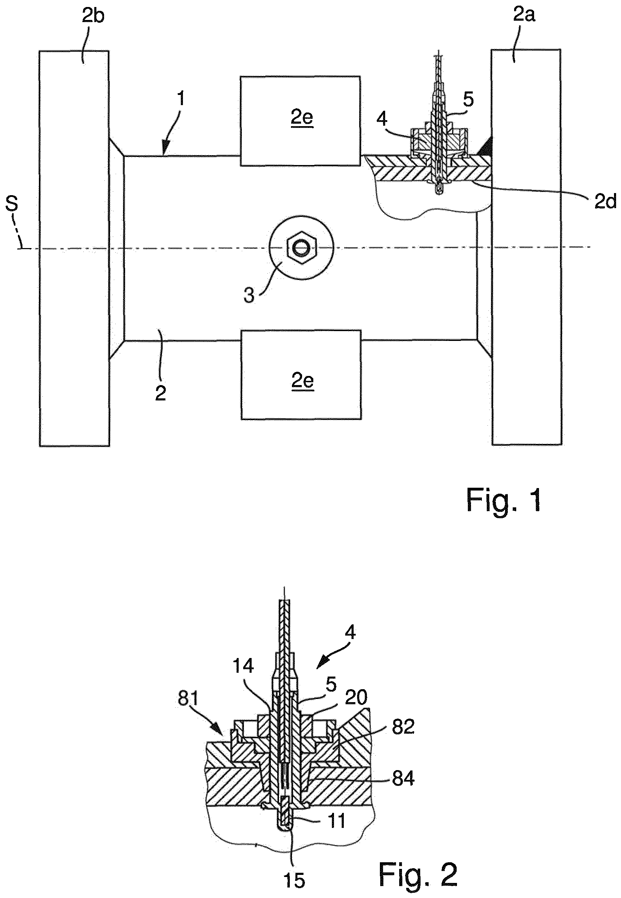

Das Messprinzip eines magnetisch-induktiven Durchflussmessgerätes 1, wie es in Fig. 1 abgebildet ist, ist grundsätzlich bekannt. Gemäß dem Faraday'schen Induktionsgesetz wird in einem Leiter, der sich in einem Magnetfeld bewegt, eine Spannung induziert. Beim magnetisch-induktiven Messprinzip entspricht der fließende Messstoff dem bewegten Leiter. Ein Magnetfeld wird durch zwei nicht näher dargestellte Feldspulen zu beiden Seiten eines Messrohres 2 erzeugt. Senkrecht dazu befinden sich an der Rohrinnenwand des Messrohres zwei Messelektroden 3 welche die beim Durchfließen des Messstoffes erzeugte Spannung abgreifen. Die induzierte Spannung verhält sich proportional zur Durchflussgeschwindigkeit und damit zum Volumendurchfluss. Das durch die Feldspulen aufgebaute Magnetfeld wird durch einen getakteten Gleichstrom wechselnder Polarität erzeugt. Dies gewährleistet einen stabilen Nullpunkt und macht die Messung unempfindlicher gegenüber Einflüssen durch Mehrphasenstoffe, Inhomogenität in der Flüssigkeit oder geringer Leitfähigkeit. Es sind magnetisch-induktive Durchflussmessgeräte mit Spulenanordnungen mit mehr als zwei Feldspulen und anderer geometrischer Anordnung bekannt.

Im Folgenden werden zunächst die in den Fig. 1-9 dargestellten Ausführungsbeispiele näher beschrieben.

Fig. 1 zeigt ein Messrohr 2 mit einer um eine horizontale Messrohrachse S rotationssymmetrisch ausgebildete Messrohrinnenwandung eines erfindungsgemäßen Durchflussmessgerätes 1, welches im konkreten Ausführungsbeispiel als magnetisch-induktives Durchflussmessgerät ausgebildet ist. Das Messrohr 2 weist zwei Flansche 2a, 2b auf, welche eine Verbindung mit einem Prozessanschluss ermöglichen. Innerhalb des Messrohres ist eine Verankerung 2c angeordnet, auf und in welcher in Richtung des Messmediums eine Kunststoffauskleidung - ein sogenannter Liner 2d - aufgebracht ist. Die Außenwandung des Messrohres weist oberhalb und unterhalb der Messrohrachse ein Magnetsystem auf, welches in Fig. 1 nicht näher dargestellt sind. Dieses Magnetsystem erzeugt im Betrieb des magnetisch induktiven Durchflussmessgerätes ein Magnetfeld senkrecht zur Messrohrachse S. Bei horizontalem Einbau auf gleicher Höhe wie die Messrohrachse S sind zwei Messelektroden 3 angeordnet, welche sich diametral gegenüberstehen und im Betrieb eine im Messmedium erzeugte Spannung abgreifen. Sofern der Volumendurchfluss gemessen werden soll, ist es besonders von Bedeutung, dass die Befüllung des Messrohres 2 möglichst vollständig ist. Daher ist an der Messrohrachse bei horizontalem Einbau am höchsten Punkt des Innendurchmessers des Messrohres 2 eine Elektrode 4 eines Füllstandsüberwachungssystems angeordnet, welche im vorliegenden Fall als Messstoffüberwachungselektrode, kurz MSÜ-Elektrode, ausgebildet ist. Diese erstreckt sich durch den Liner 2d, sowie die metallische Messrohrwandung und ist an der mediumsabgewandten Seite der Außenwandung des Messrohres 2 befestigt. Innerhalb der MSÜ-Elektrode ist ein Temperatursensor in Form eines Widerstandsthermometers angeordnet.

Die Fig. 2a, 2b zeigen verschiedene Befestigungsvarianten der MSÜ-Elektrode 4 in der Rohrwandung des Messrohres 2.

In Fig. 2 ist eine Befestigungsvorrichtung 81 zur Befestigung der MSÜ-Elektrode 4 abgebildet. Diese Befestigungsvorrichtung 81 weist ein mehrteiliges rotationssymmetrisches Gehäuse 82 auf mit einer Gehäuselängsachse, welches an der Wandung des Messrohres aufsitzt und daran festgelegt ist.

Die Elektrode 4 selbst weist einen rotationssymmetrischen Elektrodenkörper 14 und einen rotationssymmetrischen Elektrodenkopf 15 mit einem Mittelpunkt M und einer Längsachse A auf. Am Elektrodenkörper 14 ist ein Gewinde angeordnet, in welche die Überwurfmutter 20 angreifen kann. Die Elektrode weist zudem am Elektrodenkopf eine vorzugsweise radial umlaufende Dichtleiste bzw. einen Materialüberstand oder eine Auskrempung auf, welche sich in radialer Richtung vom Mittelpunkt M über den Durchmesser des Elektrodenkörpers 14 hinaus erstreckt.
Der metallische Elektrodenkörper der MSÜ-Elektrode dient dabei als Gehäuse des Widerstandstemperaturfühlers. Die nachfolgenden Begriffe Elektrodenkörper und Elektrodenkopf stehen daher im Rahmen dieser Erfindung synonym für die Begriffe Gehäusekörper und Gehäusekopf.

Beim Festziehen der Überwurfmutter 20 wird eine längsaxiale Zugkraft auf die Elektrode 4 ausgeübt, welche radial von der Messrohrachse S wegführt. Die Elektrode 4 folgt dieser Bewegung bis der Materialüberstand 16 sich an der Innenwandung des Messrohres 2 abstützt und eine der Zugkraft gleichgerichtete Kraft aufbaut. Dabei greift der Materialüberstand 16 auf der der Stirnseite des Elektrodenkopfes 15 abgewandten Seite in die Linerschicht ein, sodass bei Festziehen der Überwurfmutter 20 eine Abdichtwirkung der Elektrode 4 erreicht wird.

In dem in Fig. 2 dargestellten Fall weist die Befestigungsvorrichtung ein einteiliges rotationssymmetrisches Gehäuse 82 aufwelches in die Messrohrwandung hineinragt. Diese Befestigungsvorrichtung hat einen kompakten Aufbau.

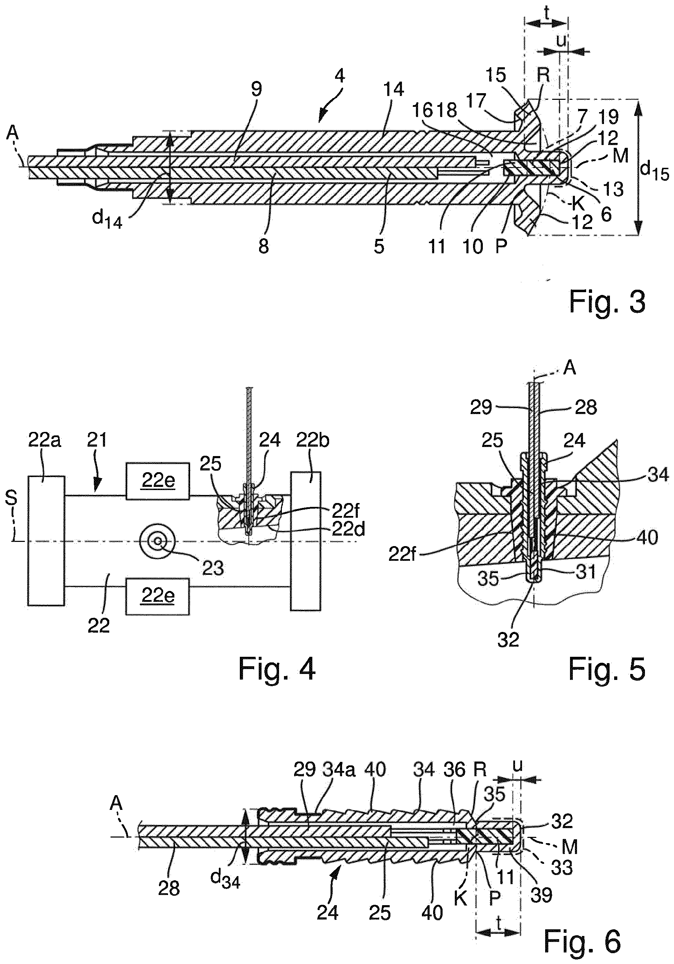

Fig. 3 zeigt eine Detailansicht einer ersten Ausführungsvariante einer Elektrode, wie sie als MSÜ-Elektrode in den Fig. 1, 2 gezeigt wurde.

Fig. 4 zeigt eine zweite bevorzugte Ausgestaltungsvariante eines erfindungsgemäßen Durchflussmessgerätes, welches als magnetisch-induktives Durchflussmessgerät 21 ausgebildet ist, mit einer Elektrode, welche in einem Füllstandsüberwachungssystem eines Rohres eingesetzt werden kann.

Diese Elektrode, welche im Detail in Fig. 6 dargestellt ist, kann insbesondere für Durchflussmessgeräte mit Messrohren mit kleinen Nennweiten eingesetzt werden, welche vorzugsweise bei DN ≤25 liegen.

Das in Fig. 4 dargestellte magnetisch induktive Durchflussmessgerät 21 weist dabei ein Messrohr 22 auf mit einer rotationssymmetrischen Innenrohrwandung und einer horizontalen Messrohrachse S. Das Messrohr 22 weist asymmetrisch ausgebildete endständige Rohrflansche 22a und 22b auf. Während ein erster Rohrflansch 22a eine breite zylindrische Grundform aufweist, läuft ein zweiter Rohrflansch 22b horizontal in Richtung der Messrohrmitte konisch zu. Das Messrohr 22 weist, wie schon das in Fig. 1 gezeigte Messrohr eine Messrohrwandung, welche aus Metall, vorzugsweise aus Edelstahl besteht. Die Innenwandung des Messrohres weist zudem eine sogenannte Linerschicht 22d auf, welche sich in Fig. 2 durch eine senkrecht zur Messrohrachse S verlaufende Bohrung 22 f der Fig. 4 bis zur Außenwandung des Messrohres 22 erstreckt. Das Messrohr weist zudem zwei diametral senkrecht zur Messrohrachse S gegenüberstehende Magnetsysteme 22e zur Aufnahme von Polschuhen einer Spulenanordnung auf, mit welcher ein vertikales zur Messrohrachse S senkrecht verlaufendes Magnetfeld erzeugt wird. Auf einer Ebene mit der Messrohrachse sind jeweils zwei Messelektroden 23 diametral gegenüberstehend an beiden Seiten des Messrohres 22 angeordnet. In der vertikalen Bohrung 22f im Messrohr 22 ist eine MSÜ-Elektrode 24 mit einem Temperatursensor 25 angeordnet.

Fig. 5 zeigt eine Detaildarstellung der Positionierung der Elektrode 24 im Messrohr 22. Um eine übersichtlichere Grafik zu erhalten, wurde auf das Darstellen der Ringnut verzichtet. Die Elektrode 24 ist rotationssymmetrisch aufgebaut mit einer Längsachse A und weist einen Elektrodenkörper 34 und einen Elektrodenkopf 35 auf. Der Elektrodenkörper 34 weist randseitig Widerhaken 40 auf, welche von der Längsachse A wegführen. Diese Widerhaken greifen in das Linermaterial ein, welches in der Bohrung 22f des Messrohres 22 angeordnet ist und sorgen für eine dauerhafte Positionierung der Elektrode 24 im Messrohr 22. In der Elektrode ist ein Temperatursensor 25 angeordnet mit einem Sensorgrundkörper 31. Dieser Sensorgrundkörper 31 ist auf Innenseite der Elektrode 24 entlang eines Innenwandungsabschnittes der Elektrode angeordnet, dessen Außenwandung die Stirnseite des Elektrodenkopfes 15 der Fig. 3 bildet.

Im Folgenden wird die spezielle Ausführungsvariante der Elektrode 4, wie sie in Fig. 3 dargestellt ist, mit dem speziell ausgebildeten Elektrodenkopf 15 näher erläutert.

Die speziell in Fig. 3 ausgebildete Elektrodenform verfügt über ein besseres Temperaturansprechverhalten und kann sowohl für die MSÜ-Elektrode oder die Bezugselektrode als auch für die Messelektroden angepasst und optimiert werden.

Die in Fig. 3 dargestellte Elektrode 4 weist den stiftförmigen bzw. zylindrischen Elektrodenkörper 14 und den Elektrodenkopf 15 auf. Dabei ist die Elektrode 4 rotationssymmetrisch aufgebaut und weist die Längsachse A auf. Die Elektrode 4 weist zudem einen inneren rotationssymmetrischen Zylinderhohlraum 16 auf, welcher sich bis in den Elektrodenkopf 15 erstreckt. Endständig in diesem Zylinderhohlraum 16 ist ein Sensorgrundkörper 11 des Temperatursensors 5 als Widerstandsthermometer angeordnet, welcher beispielsweise aus einem Verbund eines Grundkörpers 6, eines Metalldrahtes 7 und einer Schutzschicht 10 bestehen kann, so dass die Temperatur, mit welcher ein Medium auf eine Stirnfläche 12 des Elektrodenkopfes 15 trifft über die Materialwandung der Stirnfläche 12 direkt an den Temperatursensor 5, respektive den Sensorgrundkörper 11, weitergegeben wird.

In Fig. 3 wird die Elektrode 4 mit einer bevorzugten Stirnflächengeometrie, respektive Geometrie eines Elektrodenkopfes, gezeigt. Die Stirnfläche weist einen ersten randseitigen vorzugsweise umlaufenden Randabschnitt R auf, dessen Verlauf einen ersten Kreisbogen K oder einen Parabelbogen definiert. Dabei folgt der Verlauf der Stirnfläche des Elektrodenkopfes allerdings nicht der Form des durch den Randabschnitt R definierten Kreisbogens A. Dieser erste Kreisbogen K wird durch radialen Verlauf des Randabschnitts R zum Mittelpunkt M der Stirnfläche 12, insbesondere durch deren anfänglichen Anstieg, festgelegt, wobei der Mittelpunkt M der Stirnfläche 12 in Längsrichtung der Elektrode 4 oberhalb dieses ersten Kreisbogens K angeordnet ist. Anders ausgedrückt, ragt der Mittelpunkt M der Stirnfläche 12 aus dem Kreisbogen K hervor. Das Winkel α des Kreisbogens K beträgt dabei vorzugsweise weniger als 170°, vorzugsweise gleich oder weniger als 160° um ein günstiges Anströmverhalten des Mediums zu erreichen. Der Verlauf der Stirnfläche 12 in radialer Richtung zum Mittelpunkt M erreicht dabei einen Punkt P ab welchem ein Zuwachs der positiven Steigung erfolgt, wobei der Abstand t des Punktes P zum Mittelpunktes M in längsaxialer Richtung größer ist als die Wandstärke u des Elektrodenkopfes 15 entlang der Längsachse A am Mittelpunkt M der Elektrode 4 bzw. der Stirnfläche 12.

Der Randbereich oder Randabschnitt R erstreckt sich dabei vorzugsweise über einen radial zum Mittelpunkt M verlaufenden Abschnitt von zumindest 2%, vorzugsweise zumindest 4%, insbesondere zumindest 10%, des Durchmessers d₁₅ des Elektrodenkopfes 15. Besonders bevorzugt beträgt der Randabschnitt R zwischen 2-70%, insbesondere zwischen 10-60%, des Durchmessers d₁₅ des Elektrodenkopfes 15.

Der Übersichtlichkeit wegen wird der radiale Verlauf der Stirnfläche 12 anhand der im Wesentlichen baugleichen Variante E der Fig. 9 näher beschrieben. Etwa nach einem Drittel der Strecke zwischen dem äußersten randseitigen Punkt der Stirnfläche 12 und dem Mittelpunkt M der Stirnfläche 12 weicht die Stirnfläche 12 von der Form des ersten Kreisbogens K ab, derart, dass ein zweiter Abschnitt Z der Stirnfläche 12 in längsaxialer Richtung unterhalb des Kreisbogens K angeordnet ist. In diesem zweiten Abschnitt weist die Stirnfläche bis zu einem Punkt P einen zum Mittelpunkt verlaufenden negativen Anstieg bzw. eine negative Steigung auf. Am Punkt P geht der zweite Abschnitt der Stirnfläche in einen dritten Abschnitt Y über mit einem positiven Anstieg und schließlich in einen vierten Abschnitt X dessen Verlauf im Anschluss bis zum Mittelpunkt eine ebene Fläche definiert.

Die Stirnflächenform der Elektrode der Variante E der Fig. 9 und der Fig. 3 weist somit einen randseitigen Abschnitt R in Form einer Schulter auf, worauf sich eine Ringnut Z und schließlich im Zentrum eine zylindrische Form Y und X anschließt.

Die in Fig. 9 gezeigte Elektrodenform der Variante E, welche dem Ausführungsbeispiel der Fig. 3 entspricht, zeichnet sich, gegenüber den anderen in Fig. 9 abgebildeten Varianten für Elektrodenformen durch eine besonders gute Messperformance, insbesondere hinsichtlich des Temperaturansprechverhaltes und der erreichbaren Genauigkeit der Temperaturmessung im Gleichgewicht aus.
Die Stirnfläche 12 des Elektrodenkopfes 4 ist dabei vorzugsweise gegenüber dem Durchmesser d₁₄ des Elektrodenkörpers 14 zumindest 1,2-fach breiter, vorzugsweise zumindest 1,5-fach breiter, besonders bevorzugt zumindest 1,7-fach breiter.

Der Elektrodenkopf weist eine ringförmige Dichtleiste bzw. Materialüberstand oder eine Krempung auf, welcher sich in radialer Richtung über die Wandung des stiftförmigen zylindrischen Elektrodenkörpers 14 hinaus erstreckt. Die Oberseite des ringförmigen Materialüberstandes 16 bildet dabei einen Teil der endständigen Stirnfläche 12 der Elektrode. Die Unterseite des ringförmigen Materialüberstandes weist eine Kehlung 17 auf. Die Kehlung 17 ermöglicht eine teilweise Materialaufnahme des auf der Messrohrinnenwandung des magnetisch-induktiven Durchflussmessgerätes angeordneten Linermaterials, wodurch eine Dichtwirkung erreicht wird und ein Eindringen des zu messenden Mediums in den Bereich zwischen dem Elektrodenkörper 14 und dem Messrohr 2 verhindert wird. Die Öffnungsbreite, also der maximale Abstand der beiden Ränder der Kehlung,an den Rändern der Kehlung 17 beträgt vorzugsweise zwischen 2-20% des Durchmessers d₁₄ des Elektrodenkörpers, besonders bevorzugt 5-10% des Durchmessers d₁₄ des Elektrodenkörpers.

Die Stirnseite weist eine Ringnut 18 auf. Das heißt, dass die Stirnseite einen Teilbereich aufweist, welcher unterhalb des durch den ersten Randabschnitt definierten Kreisbogens K zum Elektrodenkörper 14 hin angeordnet ist. Durch die Ringnut 18 wird eine Strömungslenkung erreicht, welche das Temperaturansprechverhalten des in der Elektrode 1 angeordneten Widerstandsthermometers 5 zusätzlich verbessert. Die Ringnut 18 kann dabei vorzugsweise mehr als 1%, besonders bevorzugt mehr als 3% des Durchmessers d₁₄ des Elektrodenkörpers 14 betragen.

Im Zentrum des Elektrodenkopfes weist der Elektrodenkopf 12 eine zylindrische Ausformung 19 auf, wobei der Zylindermantel parallel zur Längsachse des Elektrodenkörpers verläuft. Eine innenliegende Grundfläche der zylindrischen Ausformung ist vorzugsweise zumindest bereichsweise eben ausgebildet und verläuft senkrecht zur Längsachse des Elektrodenkörpers. Dies hat sich als besonders günstig erwiesen, um eine möglichst dichte Anbindung zwischen dem Temperaturfühler bzw. dem Fühlergrundkörper und der Wandung im Bereich der zylindrischen Ausformung 19 zu erreichen. Diese Grundfläche ist vorzugsweise in Mediumsrichtung oberhalb des ersten Kreisbogens K, welcher durch die Randbereiche R der Stirnseite 12 des Elektrodenkopfes 14 definiert wird, angeordnet. Der Fühlergrundkörper 11 innerhalb des Temperatursensors bzw. der Elektrode kann verschiedene Formen aufweisen. So kann er beispielsweise eine zylindrische Form, eine Stabform mit quadratischem Querschnitt oder eine konische Form aufweisen. Die Wandstärke u des Elektrodenkopfes im Bereich der zylindrischen Ausformung beträgt vorzugsweise weniger als der Innendurchmesser der zylindrischen Ausformung, vorzugsweise weniger als 50% des Innendurchmesser der zylindrischen Ausformung, insbesondere zwischen 10 bis 40% des Innendurchmessers der zylindrischen Ausformung. Aufgrund dieser geringen Wandstärken ist ein verbesserter Temperaturübergang auf das Widerstandsthermometer möglich, wobei die Wandstärke zugleich einen ausreichenden mechanischen Schutz des Widerstandsthermometers bietet.

Die Wandstärke u ist vorzugsweise sowohl im Bereich des Zylindermantels als auch im Bereich der endständigen Kreisfläche der zylindrischen Ausformung 19 innerhalb eines Toleranzbereichs von 15% im Wesentlichen gleich groß, so dass auch im Bereich des Zylindermantels ein günstiger Wärmeübergang gegeben ist. Aufgrund dieser geringen Wandstärken ist ein verbesserter Wärmeübergang auf das Widerstandsthermometer möglich, wobei die Wandstärke zugleich einen ausreichenden mechanischen Schutz des Widerstandsthermometers bietet.

Dabei ist der Innendurchmesser der zylindrischen Ausformung 19 vorzugsweise kleiner als der Innendurchmesser des Elektrodenkörpers 14, besonders bevorzugt zumindest um das 1,2-fache kleiner, insbesondere zumindest um das 1,5-fache kleiner als der Innendurchmesser des Elektrodenkörpers 14.

An den Elektrodenkopf 15 schließt sich der zylindrische Elektrodenkörper 14 an. Dieser weist eine Zylinderwandung bereichsweise mit einer Wandstärke welche vorzugsweise geringer ist als der Innendurchmesser des Elektrodenkörpers d₁₄, besonders bevorzugt weniger als 50% des Innendurchmesser Elektrodenkörpers.

Der Elektrodenkörper 14 weist einen vorderen Bereich auf, welcher direkt in den Elektrodenkopf mündet und einen hinteren Bereich, welcher vorzugsweise aus dem Messrohr 2 herausragt. In diesem hinteren Bereich, weist insbesondere die Außenwandung des Elektrodenkörpers 14 eine nicht näher dargestellte Anschlussstelle auf, zur Abführung eines Signals. Dies kann beispielsweise eine Lötkontaktstelle sein, welche einen Anschluss eines Kabels ermöglicht, welches mit einer nicht näher dargestellten Auswerteeinheit verbunden ist und die empfangene oder angelegte Spannung oder Stromstärke auswertet und im Ergebnis ein Statussignal über den Befüllungszustand des Messrohres ausgibt. Dies erfolgt in Zusammenwirkung mit einer zweiten Elektrode. Die Kontaktierung beider Elektroden erfolgt bei ausreichendem Befüllungszustand über das Medium.

Das Elektrodenmaterial der vorgenannten Ausführungsbeispiele besteht vorzugsweise aus Stahl. Im Inneren der Elektrode ist im Bereich des Elektrodenkopfes 14 der Sensorgrundkörper angeordnet.
Alternativ oder zusätzlich kann der Sensorgrundkörper 11 auch durch eine Wärmeleitpaste an der Innenwandung der zylindrischen Ausformung angeordnet sein. Diese Wärmeleitpaste verringert dabei insbesondere isolierende Luft zwischen der Schichtung 11 und der Innenwandung der zylindrischen Ausformung 19 des Elektrodenkopfes 14.

Alternativ kann der Sensorgrundkörper durch Presssitz gegen die Innenwandung der zylindrischen Ausformung 19 im Zentrum des Elektrodenkopfes 14 angeordnet und gehalten werden.

Wie in Fig. 3 dargestellt, gehen eine elektrische Zuleitung und eine elektrische Ableitung in Form von Kabeln von dem Metalldraht ab. Diese werden in Längsrichtung durch den Innenraum des Elektrodenkörpers nach außen abgeführt und sind zueinander isoliert.

Am Ende des Elektrodenkörpers ist eine Kabelführung angeordnet zur Zentrierung und zum Schutz der Kabel.

Die in Fig. 3 abgebildete Elektrode 4 welche als Messstoffüberwachungselektrode (MSÜ-Elektrode) eingesetzt wird ermöglicht somit gleichzeitig die Ermittlung der Mediumstemperatur, wobei die Elektrode 4 zugleich das Sensorgehäuse des Temperatursensors 5 bildet. MSÜ-Elektroden werden üblicherweise eingesetzt um eine ungünstige Teilbefüllung eines Messrohres zu detektieren. Eine solche Teilbefüllung eines Messrohres tritt beispielsweise bei ausgasenden Messstoffen oder Anwendungen mit schwankendem Prozessdruck, Leckagen oder gezielter Entleerung der Leitung auf.

In dem erfindungsgemäßen Durchflussmessgerät der Fig. 1 bis 6 ist in einer MSÜ-elektrode 4, 24 mit einem Elektrodenkörper 14, 34 und einem Elektrodenkopf 15. 35 ist ein Temperatursensor 5, 25 in Form eines Widerstandsthermometers angeordnet, welches in der bevorzugten Ausgestaltungsvariante, gemäß Fig. 3, nachfolgend näher erläutert wird.

Grundsätzlich kann der Widerstandswert des eingesetzten Widerstandsthermometers je nach Messrohrdurchmesser und ggf. auch Wandstärke der MSÜ-Elektrode ausgewählt werden. Handelsübliche Widerstandsthermometer welche bevorzugt eingesetzt werden können haben beispielsweise Widerstandswerte von 100, 500 oder 1000 Ohm.

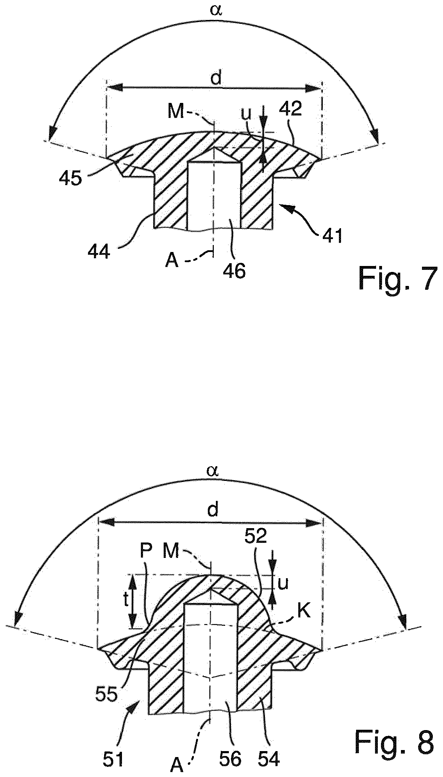

Obwohl nicht in den Fig. 7-9 dargestellt, dient der endständige Bereich der Zylinderhohlräume in den hier abgebildeten Elektroden ebenfalls der Anordnung von Sensorgrundkörper von Temperatursensoren, welche baugleich zum Temperatursensor 5 der Fig. 3 ausgebildet sind.

Im Folgenden wird die bevorzugte Ausführungsvariante einer Elektrode 24, wie sie in Fig. 6 abgebildet ist, näher beschrieben.

Die in Fig. 6 abgebildete Elektrode weist einen Elektrodenkörper 34 und einen Elektrodenkopf 35 auf und ist rotationssymmetrisch aufgebaut mit einer Längsachse A.

In Fig. 6 wird die Elektrode 24 mit einer bevorzugten Stirnflächengeometrie, respektive die Geometrie eines Elektrodenkopfes, gezeigt. Die Stirnfläche weist einen ersten randseitigen vorzugsweise umlaufenden Randabschnitt R auf, dessen Verlauf einen ersten Kreisbogen K oder einen Parabelbogen definiert. Dabei folgt der Verlauf der Stirnfläche dieser unterschiedlich ausgebildeten Elektrodenköpfe allerdings nicht der Form des durch die Randabschnitte definierten Kreisbogens K. Dieser erste Kreisbogen K wird durch radialen Verlauf der Randabschnitte R zum Mittelpunkt M der Stirnfläche 32, insbesondere durch deren anfänglichen Anstieg, festgelegt, wobei der Mittelpunkt M der Stirnfläche 32 in Längsrichtung der Elektrode 24 oberhalb dieses ersten Kreisbogens K angeordnet ist. Der Winkel des derart definierten Kreisbogens K beträgt dabei vorzugsweise weniger als 170°, vorzugsweise gleich oder weniger als 160° um ein günstiges Anströmverhalten des Mediums zu erreichen. Der Verlauf der Stirnfläche 32 in radialer Richtung zum Mittelpunkt M erreicht dabei einen Punkt P ab welchem ein Zuwachs der positiven Steigung erfolgt, wobei der Abstand t des Punktes P zum Mittelpunktes M in längsaxialer Richtung größer ist als die Wandstärke u des Elektrodenkopfes 35 entlang der Längsachse A am Mittelpunkt M der Elektrode 24 bzw. der Stirnfläche 32.

Der Randbereich oder Randabschnitt R erstreckt sich dabei vorzugsweise über einen radial zum Mittelpunkt M verlaufenden Abschnitt von zumindest 2%, vorzugsweise zumindest 4%, insbesondere zumindest 10%, des Durchmessers d₃₅ des Elektrodenkopfes 35. Besonders bevorzugt beträgt der Randabschnitt R zwischen 2-70%, insbesondere zwischen 10-60%, des Durchmessers d₃₅ des Elektrodenkopfes 35.

Etwa auf nach einem Drittel der Strecke zwischen dem äußersten randseitigen Punkt der Stirnfläche 32 und dem Mittelpunkt M der Stirnfläche 32 weicht die Stirnfläche 32 von der Form des ersten Kreisbogens K ab, derart dass der Verlauf in einen zweiten Abschnitt übergeht mit einem positiven steileren Anstieg und schließlich in einen dritten Abschnitt dessen Verlauf im Anschluss bis zum Mittelpunkt eine ebene Fläche definiert.

Die Stirnflächenform der Elektrode der Fig. 6 weist somit einen randseitigen Abschnitt R in Form einer Schulter auf, worauf sich im Zentrum eine zylindrische Form anschließt.

Die Stirnfläche 32 des Elektrodenkopfes 24 ist dabei vorzugsweise gegenüber dem Durchmesser d₃₄ des Elektrodenkörpers 34 zumindest 1,2-fach breiter, vorzugsweise zumindest 1,5-fach breiter, besonders bevorzugt zumindest 1,7-fach breiter. Im vorliegenden Fall entspricht der Durchmesser des Elektrodenkörpers dem Durchmesser des Elektrodenkopfes.

Der Elektrodenkopf weist eine ringförmige Dichtleiste bzw. einen Materialüberstand oder eine Krempung auf, welcher sich in radialer Richtung über die Wandung des stiftförmigen zylindrischen Elektrodenkörpers 34 hinaus erstreckt. Die Oberseite des ringförmigen Materialüberstandes 36 bildet dabei einen Teil der endständigen Stirnfläche 32 der Elektrode.

Im Zentrum des Elektrodenkopfes weist der Elektrodenkopf 32 eine zylindrische Ausformung auf, wobei der Zylindermantel parallel zur Längsachse des Elektrodenkörpers 34 verläuft. Eine Grundfläche der zylindrischen Ausformung ist vorzugsweise zumindest bereichsweise eben ausgebildet und verläuft senkrecht zur Längsachse des Elektrodenkörpers. Diese Grundfläche ist vorzugsweise in Mediumsrichtung oberhalb des ersten Kreisbogens K, welcher durch die Randbereiche R der Stirnseite 32 des Elektrodenkopfes 34 definiert wird, angeordnet. Da der Sensorgrundkörper 31 aus Keramik-Grundkörper, Metalldraht und Glasschutzschicht innerhalb der Elektrode ebenfalls eine zylindrische Form aufweist und der Sensorgrundkörper 31 abschnittsweise innerhalb der zylindrische Ausformung angeordnet ist, erfolgt eine besonders günstige Temperaturübertragung über die Stirnfläche 32 auf das Widerstandsthermometer 25. Die Wandstärke u des Elektrodenkopfes im Bereich der zylindrischen Ausformung beträgt vorzugsweise weniger als der Innendurchmesser der zylindrischen Ausformung, vorzugsweise weniger als 50% des Innendurchmesser der zylindrischen Ausformung, insbesondere zwischen 10 bis 40% des Innendurchmessers der zylindrischen Ausformung. Aufgrund dieser geringen Wandstärken ist ein verbesserter Temperaturübergang auf das Widerstandsthermometer möglich, wobei die Wandstärke zugleich einen ausreichenden mechanischen Schutz des Widerstandsthermometers bietet.

Dabei ist der Innendurchmesser der zylindrischen Ausformung 39 vorzugsweise kleiner als der Innendurchmesser des Elektrodenkörpers 34, besonders bevorzugt zumindest um das 1,2-fache kleiner, insbesondere zumindest um das 1,5-fache kleiner als der Innendurchmesser des Elektrodenkörpers 34.

Darüber hinaus ein endständiger Wandungsabschnitt 34a des Elektrodenkörpers 34 eine Kontaktfläche auf, besonders bevorzugt einen Goldkontakt auf. An diesemr Kontaktfläche bzw. Goldkontakt kann ein nicht näher dargestelltes Kabel angebracht sein, welches eine Signalverbindung mit einer Auswerteeinheit herstellt.

An den Elektrodenkopf 35 schließt sich der zylindrische Elektrodenkörper 34 an. Dieser weist eine Zylinderwandung bereichsweise mit einer Wandstärke welche vorzugsweise geringer ist als der Innendurchmesser des Elektrodenkörpers d₃₄, besonders bevorzugt weniger als 50% des Innendurchmesser Elektrodenkörpers.

Der Elektrodenkörper 34 weist einen vorderen Bereich auf, welcher direkt in den Elektrodenkopf mündet und einen hinteren Bereich, welcher vorzugsweise aus dem Messrohr 22 herausragt. In diesem hinteren Bereich, weist insbesondere die Außenwandung des Elektrodenkörpers 34 eine nicht näher dargestellte Anschlussstelle auf, zur Abführung eines Signals. Dies kann beispielsweise eine Lötkontaktstelle sein, welche einen Anschluss eines Kabels ermöglicht, welches mit einer nicht näher dargestellten Auswerteeinheit verbunden ist und die empfangene Spannung oder Stromstärke auswertet und im Ergebnis ein Statussignal über den Befüllungszustand des Messrohres ausgibt. Dies erfolgt in Zusammenwirkung mit einer zweiten Elektrode. Die Kontaktierung beider Elektroden erfolgt bei ausreichendem Befüllungszustand über das Medium.

Das Elektrodenmaterial der vorgenannten Ausführungsbeispiele besteht vorzugsweise aus Stahl.

Weitere weniger bevorzugte Varianten einer Elektrodenform sind in den Fig. 7-9 dargestellt.

Die vorteilhafte Wirkung und der vorteilhafte Einsatz des erfindungsgemäßen Füllstandsüberwachungssystems kann grundsätzlich in allen mediumsführenden Rohren erfolgen, in welchen ein Medium mit zumindest geringer Leitfähigkeit fließt. Nachfolgend sollen weitere besondere Vorteile beim Einsatz in Durchflussmessgeräten, insbesondere in magnetisch-induktiven Durchflussmessgeräten beschrieben werden.

Die Messstoffüberwachung, auch "empty pipe detection" (EPD) genannt, durch die MSÜ-Elektrode kann auf verschiedene Weise erfolgen. So war es auch bislang u.a. möglich eine Messung des elektrischen Widerstandes zwischen der MSÜ-Elektrode und einer Bezugselektrode oder dem Prozessanschluss, welcher beispielsweise mit Erdscheiben bzw. Erdelektroden ausgestattet sein kann, durchzuführen. Dabei erhöht sich der elektrische Widerstand beispielsweise bei der Messung von Mineralwasser sehr stark , wenn das Messrohr vom Zustand vollgefüllt auf teilgefüllt wechselt.. In diesem Fall würde zwischen der Bezugselektrode oder dem Prozessanschluss und der MSÜ-Elektrode Luft statt Wasser zumindest bereichsweise angeordnet sein, so dass statt der Leitfähigkeit von Wasser die Leitfähigkeit von Luft in den Widerstand eingehen würde. Die entsprechende Impedanzänderung an der MSÜ-Elektrode wird von der Auswerteeinheit detektiert und von einer Ausgabeeinheit ein Ausgabesignal betreffend den Befüllungsgrad des Messrohres ausgegeben.

Ausgehend von dieser an sich bereits bekannten MSÜ-Technik ist es im Wesentlichen ein Ansatz der vorliegenden Erfindung über die MSÜ-Elektrode auch eine Temperaturermittlung zu ermöglichen.

In einer ersten Ausführungsvariante, wie sie in Fig. 1 und 4 dargestellt ist, wird die Temperaturermittlung dadurch ermöglicht, dass die MSÜ-Elektrode nach wie vor in Kombination mit einer Bezugselektrode und/oder dem Prozessanschluss eine Widerstandsmessung in Abhängigkeit von der Leitfähigkeit des Mediums durchführt. Der Befüllungszustand des Messrohres kann durch eine nicht näher dargestellte Auswerteeinheit ermittelt und an eine hier nicht dargestellte Ausgabeeinheit weitergegeben werden. In die MSÜ-Elektrode ist ein Widerstandsthermometer eingeführt, welche eine mit der Mediumstemperatur in Beziehung stehende Eigenschaft aufweist, welche von der Auswerteeinheit zur Bestimmung der Mediumstemperatur verwendet werden kann. Die Temperaturinformation kann wiederum an die Ausgabeeinheit weitergegeben werden. Um eine geringere Messabweichung der Mediumstemperatur zu erhalten, hat es sich als günstig erwiesen, dass die Temperatursonde um einige µm oder mm in das Messrohr 2, 22 hineinragt und von dem Medium umspült wird. Die MSÜ-Elektrode ist dabei zylinderförmig aufgebaut und weist eine endständige Stirnseite auf, welche in das Messrohr hineinragt.

Das Hineinragen der MSÜ-Elektrode 4, 24 in das Medium hat allerdings bei horizontalem Einbau und bestimmungsgemäss sich im obersten Bereich im Inneren des Messrohrs befindlicher MSÜ-Elektrode ein späteres Ansprechen der MSÜ zur Folge bzw. ein Ansprechen bei einem niedrigeren Befüllungsgrad. Dem kann vorteilhaft entgegengewirkt werden, indem die Stirnseite 12, 32 des Elektrodenkopfes 15, 35 abschnittsweise elektrisch isolierend beschichtet wird, wobei gleichzeitig die Wärmeleitfähigkeit der Beschichtung 13, 33 möglichst hoch sein sollte. Durch die teilweise Isolierung der Stirnfläche 12, 32, insbesondere im Bereich des Mittelpunktes des rotationssymmetrischen Elektrodenkopfes 15, 35 kommt es zur Mediums-Kontaktierung an den elektrisch-leitenden Bereichen der MSÜ-Elektrode, welche sich nahezu auf einer Ebene mit der Wandung des Messrohres befinden.

In einer zweiten Ausführungsvariante der Erfindung kann MSÜ-Funktion bzw. die einsetzende Teilfüllung durch einen Sprung der gemessenen Temperatur detektiert werden. Bedingung hierfür ist, dass die tatsächliche Mediumstemperatur als Referenz bekannt ist. Diese kann durch ein im Gerät angeordnetes zweites Widerstandsthermometer erfasst werden. In diesem Fall könnte auf die elektrisch isolierende Beschichtung aus dem vorherigen Abschnitt verzichtet werden. Eine Bedingung wäre allerdings ein hinreichend grosser Temperaturunterschied zwischen der Mediumstemperatur und der im teilbefüllten Messrohr entstehenden Freiraum vorherrschenden Temperatur, welche den Temperatursprung auslöst.
In den in Fig. 1, 3 und 4 dargestellten Ausführungsbeispielen ist das Widerstandsthermometer bzw. der Temperatursensor 5, 25 in die MSÜ-Elektrode 4, 24 integriert, wobei der Elektrodenkörper 14, 34 und der Elektrodenkopf 15, 35 zugleich als Gehäuse für das Widerstandsthermometer fungiert.

Alternativ zur Anordnung in einer MSÜ-Elektrode kann in einer dritten Ausführungsvariante die Bezugselektrode einen integrierten Temperatursensor aufweisen, wobei die besagte Bezugselektrode sekundär zur Messstoffüberwachung eingesetzt wird und ein Signal aussendet, das von der MSÜ-Elektrode empfangen wird. Diese Bezugselektrode kann ebenfalls die Mediumstemperatur ermitteln.

Bedingung für eine MSÜ-Überwachung ist in vorgenannten Ausführungsbeispielen, dass zumindest eine der Elektroden, die MSÜ-Elektrode oder die Bezugselektrode, bei horizontalem Einbau im obersten Bereich der Innenwandung des Messrohres angeordnet ist, so dass eine unvollständige Befüllung umgehend detektierbar ist.

In einer bevorzugten Ausgestaltung der vorgenannten Ausführungsvarianten ist die MSÜ-Elektrode auf der der Bezugselektrode gegenüberliegenden Seite des Messrohres senkrecht oder schräg zur Messrohrachse auf oder in der Innenwandung des Messrohres angeordnet.

In einer vierten Ausführungsvariante der Erfindung kann sowohl die Bezugselektrode als auch die MSÜ-Elektrode ein integriertes Widerstandsthermometer aufweisen. Dabei ist sowohl die Bezugselektrode als auch die MSÜ-Elektrode an dem obersten Punkt des Rohrquerschnitts versetzt in Strömungsrichtung angeordnet. Durch eine derartige Anordnung ist beispielsweise eine Belagserkennung unter der Voraussetzung einer Temperaturdifferenz zwischen der Mediumstemperatur und der Umgebungstemperatur möglich. Falls eine Änderung des Widerstandes zwischen den beiden Elektroden durch einen nicht vollständigen Befüllungsgrades des Messrohres verursacht ist, sollten sich bei gleichen Verhältnissen an den Elektroden die ermittelten Temperaturen der Temperatursensoren der MSÜ-Elektrode und der Bezugselektrode im gleichen Zeitintervall an eine neue Gleichgewichtstemperatur angleichen. Ist der Temperaturverlauf bei einer der beiden Elektroden deutlich langsamer oder wird eine andere Gleichgewichtstemperatur erreicht, so kann an dieser Stelle ein thermisch isolierender Belag vorhanden sein. Damit die Belagsbildung bei beiden Elektroden nicht in gleichem Masse auftritt und somit keine Unterscheidung bzw. Belagserkennung durch Temperaturdifferenzen mehr möglich ist, sollten entsprechende Vorkehrungen getroffen werden, wie z.B. unterschiedliche Oberflächenstrukturierung oderbeschichtung oder periodisches Anlegen von Spannungen an einer der beiden Elektroden, welche einem Schichtaufbau entgegenwirken (ECC = electrode cleaning circuit). Die Auswirkungen dieser Massnahmen auf die Temperaturmessung ist selbstverständlich zu berücksichtigen
Unabhängig davon ist durch die Temperaturmessung durch sowohl die MSÜ-Elektrode als auch durch die Bezugselektrode ein Abgleich der Messdaten und die Ausgabe eines Hinweises auf eine technischen Störung bei uneinheitlichen Werten möglich.

In einer fünften Ausführungsvariante der Erfindung können zusätzlich zur MSÜ-Elektrode und der Bezugselektrode auch die beiden Messelektroden des Magnetisch-induktiven Durchflussmessgerätes mit einem Widerstandsthermometer ausgestattet sein.

Dabei sind die vier vorgenannten Elektroden in einer bevorzugten Ausgestaltung der fünften Ausführungsvariante zu einer benachbarten Elektrode mit einem Winkel von 90° im Rohrquerschnitt angeordnet, wobei sich die beiden Messelektroden diametral gegenüberstehen.

In der geschnittenen Rohrseitenansicht können die Messelektroden in Strömungsrichtung auch vor oder hinter der MSÜ-Elektrode und der Bezugselektrode angeordnet sein.

Die vorteilhafte Ausgestaltung dieser Anordnung ermöglicht dabei unter bestimmten Verhältnissen Rückschlüsse auf das Strömungsprofil über den Rohrquerschnitt. Üblicherweise ist ein magnetisch-induktives Durchflussmessgerät ausgelegt für ein rotationssymmetrisches Strömungsprofil. Die zuvor beschriebene Anordnung von Elektroden mit jeweils zumindest einem integrierten Temperaturfühler erlaubt es Abweichungen von der Rotationssymmetrie bei der Messung zu berücksichtigen und deren Einfluss auf die Messergebnisse zu verringern. Die Abweichungen von der Rotationssymmetrie können dabei je nach Art und Ausprägung variieren und hängen u.a. vom Messrohrdurchmesser ab.

Die vorgenannte Anordnung der Elektroden würde es erlauben bei raschem Wechsel auf ein Medium mit anderer Temperatur oder bei Einleitung von zwei Medien mit deutlich unterschiedlicher Temperatur vor dem Durchflussmessgerät die Rotationssymmetrie der Strömung zu beurteilen. Basierend darauf kann entweder die Ausgabe eines Warnhinweises auf das Vorliegen einer nichtrotationssymmetrischen Strömung erfolgen oder eine Messwertkorrektur. Für letztgenanntes ist allerdings eine empirische Vorabbestimmung von temperaturverteilungsabhängigen Korrekturwerten z.B. in einem Kalibrierverfahren notwendig, auf welche bei Inbetriebnahme zurückgegriffen werden kann. Die vorgenannte Anordnung ist dabei selbstverständlich nur ein mögliches Ausführungsbeispiel. Es versteht sich, dass eine Abweichung von der Rotationssymmetrie auch bereits über eine Dreipunktbestimmung zumindest erfassbar ist, beispielsweise durch die MSÜ-Elektrode und die zwei Messelektroden. Allgemein gilt, dass mit steigender Anzahl an Messpunkten entlang des Rohrumfangs auch eine zunehmend bessere Bestimmung der Rotationssymmetrie möglich wird. Da allerdings die vorgenannten vier Elektroden in dieser Anordnung bereits in Messgeräten vorgesehen sind, bedarf es keiner weiteren konstruktiven Anpassung des Messrohres und der Elektrodensymmetrie sondern es kann auf bestehende bewährte Anordnungen zurückgegriffen werden.

Üblicherweise wird in einem magnetisch-induktiven Durchflussmesser der Volumendurchfluss eines Mediums bestimmt. In einer sechsten Ausführungsvariante der Erfindung ist es möglich, aus der Temperaturmessung, beispielsweise zwischen der Bezugselektrode und der MSÜ-Elektrode oder zwischen der Bezugselektrode, der MSÜ-Elektrode und den zwei Messelektroden durch die Temperaturmessung bei bekannter Dichte des Mediums eine Angabe zur mittleren Dichte abzuleiten, was Rückschlüsse auf einen Massedurchfluss des Mediums zulässt.

Hierbei kann z.B. durch numerische Simulation in bestimmten Fällen ein Zusammenhang zwischen der Temperaturverteilung der Strömung im Bereich der Messrohrwandung und der Dichteverteilung des Mediums ermittelt und entsprechende Korrekturfunktionen abgeleitet werden.

Für die vorgenannten Ausführungsvarianten kann die Elektrodenform sowohl der MSÜ-Elektrode, der Bezugselektrode und/oder der Messelektroden angepasst und optimiert werden. Verschiedene bevorzugte Ausgestaltungen der Elektroden werden nachfolgend anhand der Fig. 7 - 9 näher beschrieben.

Die in Fig. 7-9 ausschnittsweise dargestellten Elektroden sind rotationssymmetrisch aufgebaut mit einem Elektrodenkörper 44, 54 und dem Elektrodenkopf 45, 55 mit einer Stirnfläche 12, 32. Die Elektroden weisen einen inneren Zylinderhohlraum 46, 56 auf. Endständig in diesem Zylinderhohlraum 46, 56 ist der Temperatursensor bzw. das Widerstandsthermometer 5, 25 insbesondere die Schichtung 11, 31 aus Keramik-Grundkörper 6, Metalldraht 7 und Glasschutzschicht 10 angeordnet, so dass die Temperatur auf der Stirnfläche über das Widerstandsthermometer 5, 25 detektierbar ist.

Fig. 7 zeigt eine erste bevorzugte Elektrodenform einer MSÜ-Elektrode 41 oder Bezugselektrode, wie sie bislang bereits in magnetisch-induktiven Durchflussmessgeräten eingesetzt wird. Diese Elektrode weist eine kreisbogenförmige Stirnfläche 42 auf. Der Winkel α des Kreisbogens beträgt dabei vorzugsweise weniger als 170°, vorzugsweise weniger als 160° um ein günstiges Temperaturansprechverhalten für eine Stirnfläche 42 in Kreisbogenform zu erreichen. Dieses Temperaturansprechverhalten ist in Fig. 9 dargestellt. Dabei erkennt man, dass die Kreisbogenform der Stirnfläche gegenüber anderen weiterentwickelten Formen weniger vorteilhaftes Temperaturansprechverhalten aufweist. Der Vorteil dieser Elektrodenform ist allerdings, dass diese Elektrode einen sehr geringen Strömungswiderstand aufweist.

In Fig. 8 und 9 sind weitere besonders bevorzugte Ausführungsvarianten einer Stirnflächengeometrie einer Elektrode, respektive eines Elektrodenkopfes, gezeigt. Die in diesen Fig. dargestellten Ausführungsvarianten weisen Stirnflächen mit jeweils einem ersten randseitigen vorzugsweise umlaufenden Randabschnitt auf, dessen Verlauf einen ersten Kreisbogen A oder einen Parabelbogen definiert. Im Unterschied zu Fig. 7 folgt der Verlauf der Stirnfläche dieser unterschiedlich ausgebildeten Elektrodenköpfe allerdings nicht der Form des durch die Randabschnitte definierten Kreisbogens A.
Dieser erste Kreisbogen wird durch radialen Verlauf der Randabschnitte zum Mittelpunkt der Stirnfläche, insbesondere durch deren anfänglichen Anstieg, festgelegt, wobei der Mittelpunkt der Stirnfläche in Längsrichtung der Elektrode oberhalb dieses ersten Kreisbogens angeordnet ist. Anders ausgedrückt, ragt der Mittelpunkt der Stirnfläche aus dem Kreisbogen hervor.

Fig. 8 zeigt eine zweite bevorzugte Elektrodenform einer MSÜ-Elektrode oder Bezugselektrode, als Weiterentwicklung der vorgenannten Variante. Der Verlauf der Stirnfläche in radialer Richtung zum Mittelpunkt M erreicht dabei einen Punkt P ab welchem ein Zuwachs der positiven Steigung erfolgt, wobei der Abstand t des Punktes P zum Mittelpunktes M in längsaxialer Richtung größer ist als die Wandstärke u des jeweiligen Elektrodenkopfes entlang der Längsachse A am Mittelpunkt M der Elektrode

Die Stirnfläche der Elektrode weist einen Mittelpunkt auf. Ausgehend von den vom Mittelpunkt der Stirnfläche am weitesten beabstandeten Punkten der Stirnfläche beschreibt der Verlauf der Stirnfläche zunächst eine erste Kreisbogenform mit einem ersten Mittelpunktswinkel. Dieser Verlauf erstreckt sich vorzugsweise über einen vom Mittelpunkt der Stirnfläche radial beabstandeten Randabschnitt von zumindest 10% der Stirnfläche, vorzugsweise zumindest 20% der Stirnfläche, insbesondere zwischen 25-60% der Stirnfläche. Der Mittelpunkt der Stirnfläche ragt aus der ersten Kreisbogenform in Längsrichtung der stiftförmigen Elektrode hervor.
Dabei beschreibt die in Fig. 8 abgebildete spezielle Ausgestaltung des Verlaufes der Stirnfläche eine zweite Kreisbogenform mit einem zweiten Mittelpunktswinkel. Der zweite Mittelpunktswinkel ist dabei kleiner als der erste Mittelpunktswinkel.Die Elektrode in Fig. 7 hat im Schnitt stirnseitig die Form eines Kreisbogens mit einem gewissen Radius und Winkel. In Fig. 8 gibt es zwei Krümmungswechsel. Der Bereich um Punkt P könnte ebenfalls als Kreisbogen mit kleinerem Radius und Winkelbereich betrachtet werden, wobei der Mittelpunkt dieses Kreises ausserhalb der Elektrode wäre (konkav). Daran anschliessend findet ein weiterer Krümmungswechsel statt. Die oberer Stirnseite ist beispielsweise wiederum als Kreisbogen ausgebildet mit Mittelpunkt innerhalb der Elektrode (konvex). Der Radius dabei ist deutlich kleiner als der Radius des ersten Kreisbogens. Hingegen kann der Winkel sogar grösser sein als der des ersten Kreisbogens. Selbstverständlich sind auch andere Konturen als Kreisbögen denkbar. Ziel der Optimierung ist es, eine gute Kopplung des Temperatursensors zum Medium zu erreichen, was für eine dünne Wandstärke und ein weites Hineinragen in das Medium spricht. Der über die Raumwinkel gemittelte Abstand zum Medium sollte also möglichst gering sein. Randbedingungen lassen sich dazu ableiten aus Betrachtungen zur mechanischen Belastbarkeit, zur Herstellbarkeit und zum Einfluss auf das Strömungsprofil. Ein entsprechender Krümmungswechsel von konvex zu konkav lässt sich auch bei den Ausführungsbeispielen der Fig. 1-6 und 9 beobachten.

Fig. 9 zeigt weitere bevorzugte Elektrodenformen einer MSÜ-Elektrode oder Bezugselektrode (Variante B-E). Wie aus dem zeitlichen Verlauf des Temperaturansprechverhaltens hervorgeht sind diese Elektrodenformen der in Fig. 7 gezeigten Variante gegenüber bevorzugt. Auch bei diesen Ausführungsbeispielen beschreibt der vom Mittelpunkt der Stirnfläche radial beabstandete Randabschnitt eine erste Kreisbogenform mit einem ersten Mittelpunktswinkel. In den Varianten B und C nimmt der Bereich des Mittelpunktes M der Stirnfläche eine zweite Kreisbogenform mit einem zweiten Mittelpunktswinkel an, welcher zweiter Mittelpunktswinkel vorzugsweise weniger als ein Viertel, besonders bevorzugt weniger als ein Achtel des ersten Mittelpunktswinkels der ersten Kreisbogenform beträgt.

Fig. 9 zeigt zudem zwei gegenüber den Varianten A-C weiter bevorzugte Elektrodenformen mit einem zylindrischen Bereich der Stirnfläche. Dabei definiert der zum Mittelpunkt gerichtete Verlauf eines ersten randseitigen Abschnitts R der Elektrode, wie beispielsweise auch bei dem Ausführungsbeispiel der Fig.3, einen ersten Kreisbogen. Etwa auf der Hälfte der Strecke zwischen dem äußersten randseitigen Punkt der Stirnfläche und dem Mittelpunkt der Stirnfläche weicht die Stirnfläche von der Form des ersten Kreisbogens ab, derart, dass ein zweiter Abschnitt Z der Stirnfläche in Längsrichtung der Elektrode unterhalb des Kreisbogens angeordnet ist. In diesem zweiten Abschnitt weist die Stirnfläche vorzugsweise einen zum Mittelpunkt verlaufenden negativen Anstieg auf. Dieser zweite Abschnitt der Stirnfläche geht in einen dritten Abschnitt Y über mit einem positiven Anstieg, und geht schließlich in einen vierten Abschnitt X über dessen Verlauf im Anschluss bis zum Mittelpunkt eine ebene Fläche definiert.

Die Stirnfläche der Elektrodenformen der Varianten D-E der Fig. 9 weisen somit einen randseitigen Abschnitt R in Form einer Schulter auf, worauf sich in den Varianten D und E eine Ringnut Z und schließlich im Zentrum eine zylindrische Form Y und X anschließt.

Die in Fig. 9 gezeigte Elektrodenform der Variante E, welche dem Ausführungsbeispiel der Fig. 3 entspricht, zeichnet sich, gegenüber den anderen in Fig. 9 abgebildeten Varianten für Elektrodenformen durch eine besonders gute Messperformance, insbesondere hinsichtlich des Temperaturansprechverhaltes und der Messabweichung im Gleichgewicht aus.

Daher wird diese Elektrodenform besonders bevorzugt.

Die Elektroden der vorgenannten Ausführungsbeispiele können dabei in einem Bereich, welcher um den Mittelpunkt angeordnet ist, in Fig. 3 und 9 insbesondere die Stirnfläche der zylindrischen Ausformung 19 und ggf. teilweise dessen Zylindermantel eine isolierende Beschichtung 13 auf. Technisch vorteilhaft könnte dabei eine polykristalline Diamantbeschichtung vorgesehen werden, welche eine sehr hohe thermische Leitfähigkeit mit elektrischer Isolation verbindet und chemisch, thermisch und mechanisch hoch belastbar ist.

Grundsätzlich sind alle vorgenannten Ausführungsbeispiele in Messrohren eines Durchflussmessgerätes anbringbar, welche vollständig aus Kunststoff, z.B. Polyethylen, oder vollständig aus Metall, z.B. Edelstahl, bestehen. Bei letzteren ist allerdings je nach Aufbau des Gerätes auf eine ausreichende thermische Isolation der Temperaturelektrode zum Messrohr zu achten.

Besonders bevorzugt sind jedoch Messrohre aus Metall mit einer Innenauskleidung aus Kunststoff, vorzugsweise einem Kunststoffinnenrohr und/oder einem sog. Liner. Diese Innenauskleidung ermöglicht eine thermische Isolation zwischen dem Messmedium und dem metallischen Rohr, wodurch eine thermische Entkopplung der Temperaturelektrode vom Messrohr erreicht wird. Wichtig ist dabei, dass die Elektroden z.B. durch die Auskleidung von dem "kälteren" Messrohr isoliert ist, ansonsten kommt es zu grösseren Messabweichungen.

Darüber hinaus ermöglicht eine Zwei-Elektrodenanordnung des Füllstands-überwachungssystems eine zusätzliche Ermittlung des Verkeimungszustandes der Elektroden bei Brauchwasser.

Vorzugsweise kann die Auswahl eines geeigneten Grenzwertes des Befüllungsgrades vom Rohrdurchmesser abhängen.

Bei kleineren Rohrdurchmessern ragt die MSÜ-Elektrode aufgrund ihrer Geometrie bezogen auf den Befüllungsgrad um mehr Prozente des Messrohrdurchmessers in das Messrohr hinein als bei großen Rohrdurchmessern.

Daher kann eine bevorzugte graduelle Unterscheidung getroffen werden.

Bei einer Rohrnennweite DN zwischen 2 bis 8 wird der Grenzwert des Befüllungsgrades vorzugsweise aus einem Bereich zwischen 55 bis 99% ausgewählt.

Bei einer Rohrnennweite DN zwischen 8 bis 200 wird der Grenzwert des Befüllungsgrades vorzugsweise aus einem Bereich von über 75% ausgewählt.

Bei einer Rohrnennweite DN zwischen 200 bis 1000 wird der Grenzwert des Befüllungsgrades vorzugsweise aus einem Bereich von über 95% ausgewählt.

Bei einer Rohrnennweite DN zwischen 1000 bis 2000 wird der Grenzwert des Befüllungsgrades vorzugsweise aus einem Bereich von über 99% ausgewählt.

Bei einer Rohrnennweite DN über 2000 wird der Grenzwert des Befüllungsgrades vorzugsweise aus einem Bereich von über 99,6% ausgewählt.

### Bezugszeichen

- 1, 21: Durchflussmessgerät;
- 2, 22: Messrohr;
- 2a, 22a: Seitenteil/Flansch;
- 2b, 22b: Flansch
- 2d, 22d: Liner
- 2e, 22e: Magnetsystem
- 22f: Bohrung
- 3, 23: Messelektroden
- 4, 24, 41, 51: Elektrode
- 5, 25: Temperatursensor
- 6: Keramikgrundkörper
- 7: Metalldraht
- 8,28: Stromzuleitung
- 9, 29: Stromableitung
- 10: Glasschutzschicht
- 11,31: Sensorgrundkörper
- 12, 32, 42, 52: Stirnseite bzw. Stirnfläche
- 13, 33: Beschichtung
- 14, 34, 44, 54: Elektrodenkörper
- 15, 35, 45, 55: Elektrodenkopf
- 16, 36: Zylinderhohlraum
- 17: Kehlung
- 18: Ringnut
- 19, 39: zylindrische Ausformung
- 20,40: Befestigungsmittel
- 81: Befestigungsvorrichtung
- 82: Gehäuse
- 84: flanschförmige Ausformung
- S: Messrohrachse
- A: Längsachse (Elektrode)
- M: Mittelpunkt (Stirnfläche)
- K: Kreisbogen
- R: Randabschnitt
- P: Punkt (positiver Steigungswechsel)
- Z: Abschnitt
- Y: Abschnitt
- X: Abschnitt
- u: Wandstärke
- t: längsaxialer Abstand (P-M)
- α: Bogenwinkel
- d₁₄, d₃₄: Durchmesser (Elektrodenkörper)
- d₁₅,: Durchmesser (Elektrodenkopf)

## Patentansprüche

1. Füllstandsüberwachungssystem mit zumindest einer Elektrode (4, 24, 41, 51) zur Überwachung des Füllstandes eines fließenden Mediums in einem Rohr, **dadurch gekennzeichnet, dass** die Elektrode (4, 24, 41, 51) einen integrierten Temperatursensor (5, 25) aufweist, wobei das Füllstandsüberwachungssystem eine Auswerteeinheit aufweist, welche ausgebildet ist zur Überwachung des Befüllungsgrades des Rohres, und welche Auswerteeinheit ein Warnsignal aussendet, sofern der Befüllungsgrad einen Grenzwert, insbesondere einen Befüllungsgrad von weniger als 55% des Rohrdurchmessers, unterschreitet, wobei die Elektrode (4, 24, 41, 51) einen Elektrodenkopf (15, 35, 45, 55) aufweist, welcher Elektrodenkopf (15, 35, 45, 55) eine Stirnfläche (12, 32, 42, 52) mit einen Mittelpunkt (M) aufweist und zumindest einen ersten dazu radial beabstandeten Randbereich (R), wobei zumindest der erste Randbereich (R) einen ersten in Mediumsrichtung gewölbten Kreisbogen (K) oder eine in Mediumsrichtung gewölbte Parabel definiert, wobei der Elektrodenkopf (15, 35, 45, 55) rotationssymmetrisch mit einer Längsachse (A) der Elektrode ausgebildet ist, **dadurch gekennzeichnet, dass**
der Mittelpunkt (M) der Stirnfläche (12, 32, 42, 52) in Mediumsrichtung vom Kreisbogen (K) oder von der Parabel beabstandet ist.

2. Füllstandsüberwachungssystem nach Anspruch 1, **dadurch gekennzeichnet, dass** die Auswerteeinheit ein Warnsignal aussendet, sofern der Befüllungsgrad einen Grenzwert von weniger als 80%, vorzugsweise einen Befüllungsgrad von weniger als 95% des Rohrdurchmessers, vorzugsweise 98% des Rohrdurchmessers unterschreitet

3. Füllstandsüberwachungssystem nach Anspruch 1 oder 2, **dadurch gekennzeichnet, dass** das Füllstandsüberwachunssystem zumindest eine Schaltung zum Anlegen einer Spannung zwischen einer ersten Elektrode (4, 24, 41, 51) und einer zweiten Elektrode aufweist, wobei eine Kontaktierung beider Elektroden über das im Rohr befindliche Medium erfolgt, wobei der Temperatursensor (5, 25) in die erste Elektrode (4, 24, 41, 51) oder die zweite Elektrode integriert ist.

4. Füllstandsüberwachungssystem nach Anspruch 3, **dadurch gekennzeichnet, dass** die erste und die zweite Elektrode (4, 24, 41, 51) jeweils mit einem integrierten Temperatursensor (5, 25) ausgestattet sind.

5. Füllstandsüberwachungssystem nach einem der vorhergehenden Ansprüche, **dadurch gekennzeichnet, dass** der Temperatursensor (5, 25) der Elektrode (4, 24, 41, 51) oder der Elektroden mit einer Auswerteeinheit verbunden ist, welche ausgelegt ist zur Bestimmung der Mediumstemperatur.

6. Füllstandsüberwachungssystem nach mindestens einem der vorigen Ansprüche, **dadurch gekennzeichnet, dass** der Randbereich (R) sich über einen radial zum Mittelpunkt (M) verlaufenden Abschnitt von zumindest 2%, vorzugsweise zumindest 4%, insbesondere zumindest 10%, des Durchmessers des Elektrodenkopfes (15, 35, 45, 55) erstreckt.

7. Füllstandsüberwachungssystem nach mindestens einem der vorigen Ansprüche, **dadurch gekennzeichnet, dass** der Verlauf der Stirnfläche (12, 32, 52) in radialer Richtung zum Mittelpunkt (M) einen Punkt (P) erreicht ab welchem ein Zuwachs in Mediumsrichtung einer positiven Steigung erfolgt, wobei der Abstand (t) des Punktes (P) zum Mittelpunkt (M) in längsaxialer Richtung größer ist als die Wandstärke (u) der Stirnseite des Elektrodenkopfes (12, 32, 52) [oder des Elektrodenkopfes (15, 35, 55)] entlang der Längsachse (A) am Mittelpunkt (M) der Elektrode (4, 24, 51).

8. Füllstandsüberwachungssystem nach einem der Ansprüche 1 bis 6, **dadurch gekennzeichnet, dass** der Verlauf der Stirnfläche (12, 32, 52) in radialer Richtung zum Mittelpunkt (M) in Mediumsrichtung zunächst einen konvexen Verlauf beschreibt und daran anschließend einen konkaven Verlauf, wobei der konkave Verlauf einen Scheitelpunkt (P) aufweist und wobei der Abstand (t) des Punktes (P) zum Mittelpunkt (M) in längsaxialer Richtung größer ist als die Wandstärke (u) des Elektrodenkopfes (15, 35, 55) entlang der Längsachse (A) am Mittelpunkt (M) der Elektrode (4, 24, 51).

9. Füllstandsüberwachungssystem nach einem der vorhergehen Ansprüche, **dadurch gekennzeichnet, dass** ein stirnseitiger Abschnitt des Elektrodenkopfes (15, 35, 55) als zylindrische Ausformung (19, 39) ausgebildet ist, deren Zylinderwandung parallel zur Längsachse der Elektrode (4, 24, 51) verläuft.

10. Füllstandsüberwachungssystem nach Anspruch 3, **dadurch gekennzeichnet, dass** die Temperatursensoren (5, 25) der Elektroden (4, 24, 41, 51) mit einer Auswerteeinheit verbunden sind, welche ausgelegt ist zur Belagserkennung auf einer der Elektroden (4, 24, 41, 51).

11. Füllstandsüberwachungssystem nach einem der vorhergehenden Ansprüche, **dadurch gekennzeichnet, dass** die Auswerteeinheit ein Anzeigenelement aufweist zur Anzeige der Mediumstemperatur und/oder des Belagszustandes der Elektrode (4, 24, 41, 51) und/oder zur Anzeige des Befüllungszustandes des Rohres.

12. Füllstandsüberwachungssystem nach einem der vorhergehenden Ansprüche, **dadurch gekennzeichnet, dass** ein erstes stirnseitiges Teilsegment des Elektrodenkopfes (12, 32, 42, 52) eine elektrisch-isolierende Beschichtung (13, 33) aufweist und ein zweites stirnseitiges Teilsegment des Elektrodenkopfes (12, 32, 42, 52) beschichtungsfrei ausgebildet ist.

13. Durchflussmessgerät (1, 21) mit einem Messrohr (2, 22) und einer Vorrichtung zur Ermittlung der Durchflussgeschwindigkeit und/oder des Volumendurchflusses eines Mediums in dem Messrohr (2, 22), **dadurch gekennzeichnet, dass** das Durchflussmessgerät (1, 21) ein Füllstandsüberwachungssystem gemäß einem der Ansprüche 1-12 aufweist, welches Füllstandsüberwachungssystem zumindest eine Elektrode (4, 24, 41, 51) mit einem integrierten Temperatursensor (5, 25) aufweist, welche Elektrode (4, 24, 41, 51) im Messrohr (2, 22) oder in einem an das Messrohr (2, 22) angeschlossenen Prozessanschluss angeordnet ist, welche insbesondere ausgebildet ist zur Bestimmung der Temperatur und des Füllstandes des Mediums im Messrohr (2, 22), wobei das Füllstandsüberwachungssystem eine Auswerteeinheit aufweist zur Überwachung des Befüllungsgrades des Messrohres (2, 22) und welche Auswerteeinheit ein Warnsignal aussendet, sofern der Befüllungsgrad einen Grenzwert, insbesondere einen Befüllungsgrad von weniger als 55% des Rohrdurchmessers, unterschreitet.

14. Durchflussmessgerät nach Anspruch 13, **dadurch gekennzeichnet, dass** das Durchflussmessgerät (1, 21) als ein magnetisch-induktives Durchflussmessgerät (1, 21) ausgebildet ist und welches zwei Messelektroden (3, 23) insbesondere zur Durchflussmessung aufweist sowie eine weitere zum Füllstandsüberwachungssystem gehörende Elektrode (4, 24, 41, 51, 61).

## Claims

1. Level monitoring system with at least an electrode (4, 24, 41, 51) designed to monitor the level of a medium flowing through a tube, **characterized in that** the electrode (4, 24, 41, 51) has an integrated temperature sensor (5, 25), wherein the level monitoring system has an evaluation unit, which is designed to monitor the filling degree of the tube, and wherein said evaluation unit emits a warning signal if the filling degree falls below a limit value, particularly a filling degree of less than 55 % of the tube diameter, wherein the electrode (4, 24, 41, 51) has an electrode head (15, 35, 45, 55), said electrode head (15, 35, 45, 55) having a front face (12, 32, 42, 52) with a center point (M) and at least a first peripheral zone (R) spaced radially from said point, wherein at least the first peripheral zone (R) defines a first arc (K) curved in the direction of the medium or a parabola curved in the direction of the medium, wherein the electrode head (15, 35, 45, 55) is formed in a rotationally symmetric manner in relation to a longitudinal axis (A) of the electrode, **characterized in that**
the center point (M) of the front face (12, 32, 42, 52) is spaced at a distance from the arc (K) or the parabola in the direction of the medium.

2. Level monitoring system as claimed in Claim 1, **characterized in that** the evaluation unit emits a warning signal if the filling degree falls below a limit value of less than 80 %, preferably a filling degree of less than 95 % of the tube diameter, preferably 98 % of the tube diameter.

3. Level monitoring system as claimed in Claim 1 or 2, **characterized in that** the level monitoring system comprises at least a circuit for the application of a voltage between a first electrode (4, 24, 41, 51) and a second electrode, wherein the two electrodes are in put in contact via the medium located in the pipe, wherein the temperature sensor (5, 25) is integrated in the first electrode (4, 24, 41, 51) or the second electrode.

4. Level monitoring system as claimed in Claim 3, **characterized in that** the first and the second electrode (4, 24, 41, 51) are each equipped with an integrated temperature sensor (5, 25).

5. Level monitoring system as claimed in one of the previous claims, **characterized in that** the temperature sensor (5, 25) of the electrode (4, 24, 41, 51) or the electrodes is connected to an evaluation unit, which is designed to determine the temperature of the medium.

6. Level monitoring system as claimed in at least one of the previous claims, **characterized in that** the peripheral zone (R) extends over a section extending radially to the center point (M) of at least 2 %, preferably of at least 4 %, particularly of at least 10 %, of the diameter of the electrode head (15, 35, 45, 55).

7. Level monitoring system as claimed in at least one of the previous claims, **characterized in that** the course of the front face (12, 32, 52) in the radial direction towards the center point (M) reaches a point (P) as of which an increase, in the medium direction, of a positive slope occurs, wherein the distance (t) of the point (P) in relation to the center point (M) in the longitudinal axial direction is greater than the wall thickness (u) of the front face of the electrode head (12, 32, 52) [or of the electrode head (15, 35, 55)] along the longitudinal axis (A) at the center point (M) of the electrode (4, 24, 51).

8. Level monitoring system as claimed in one of the Claims 1 to 6, **characterized in that** the course of the front face (12, 32, 52) in the radial direction towards the center point (M) in the direction of the medium first describes a convex course and then a concave course, wherein the concave course has a vertex (P) and wherein the distance (t) of the point (P) to the center point (M) in the direction of the longitudinal axis is greater than the wall thickness (u) of the electrode head (15, 35, 55) along the longitudinal axis (A) at the center point (M) of the electrode (4, 24, 51).

9. Level monitoring system as claimed in one of the previous claims, **characterized in that** a front section of the electrode head (15, 35, 55) is formed as a cylindrical shape (19, 39) whose cylindrical wall is parallel to the longitudinal axis of the electrode (4, 24, 51).

10. Level monitoring system as claimed in Claim 3, **characterized in that** the temperature sensors (5, 25) of the electrodes (4, 24, 41, 51) are connected to an evaluation unit, which is designed to detect deposit on one of the electrodes (4, 24, 41, 51).

11. Level monitoring system as claimed in one of the previous claims, **characterized in that** the evaluation unit has a display element for displaying the medium temperature and/or the deposit buildup state of the electrode (4, 24, 41, 51) and/or to display the filling state of the tube.

12. Level monitoring system as claimed in one of the previous claims, **characterized in that** a first frontal sub-segment of the electrode head (12, 32, 42, 52) has an electrically isolating coating (13, 33), and **in that** a second frontal sub-segment of the electrode head (12, 32, 42, 52) is designed without any coating.

13. Flowmeter (1, 21) with a measuring tube (2, 22) and an apparatus to determine the flow velocity and/or volume flow of a medium in the measuring tube (2, 22), **characterized in that** the flowmeter (1, 21) has a level monitoring system as claimed in one of the Claims 1 to 12, wherein said level monitoring system has at least one electrode (4, 24, 41, 51) with an integrated temperature sensor (5, 25), said electrode (4, 24, 41, 51) being arranged in the measuring tube (2, 22) or in a process connection connected to the measuring tube (2, 22), wherein said electrode is particularly designed for the determination of the temperature and the level of the medium in the measuring tube (2, 22), wherein the level monitoring system has an evaluation unit for monitoring the filling degree of the measuring tube (2, 22) and wherein said evaluation unit emits a warning signal if the filling degree drops below a limit value, particularly a filling degree of less than 55% of the tube diameter.

14. Flowmeter as claimed in Claim 13, **characterized in that** the flowmeter (1, 21) is designed as an electromagnetic flowmeter (1, 21) and wherein said flowmeter has two measuring electrodes (3, 23), particularly for flow measurement and another electrode (4, 24, 41, 51, 61) that belongs to the level monitoring system.

## Revendications

1. Système de surveillance de niveau avec au moins une électrode (4, 24, 41, 51) destiné à la surveillance du niveau d'un produit s'écoulant dans un tube, **caractérisé en ce que** l'électrode (4, 24, 41, 51) comporte un capteur de température intégré (5, 25), le système de surveillance de niveau comportant une unité d'exploitation, laquelle est conçue pour surveiller le degré de remplissage du tube, et laquelle unité d'exploitation émet un signal d'avertissement si le degré de remplissage tombe en dessous d'une valeur seuil, notamment un degré de remplissage inférieur à 55 % du diamètre de tube, l'électrode (4, 24, 41, 51) présentant une tête d'électrode (15, 35, 45, 55), laquelle tête d'électrode (15, 35, 45, 55) présente une face frontale (12, 32, 42, 52) avec un centre (M) et au moins une première zone marginale (R) espacée radialement de celui-ci, au moins la première zone marginale (R) définissant un premier arc de cercle (K) courbé dans la direction du produit ou une parabole courbée dans la direction du produit, la tête d'électrode (15, 35, 45, 55) étant formée de manière symétrique en rotation par rapport à un axe longitudinal (A) de l'électrode, **caractérisé en ce que** le centre (M) de la face frontale (12, 32, 42, 52) est espacé de l'arc de cercle (K) ou de la parabole dans la direction du produit.

2. Système de surveillance de niveau selon la revendication 1, **caractérisé en ce que** l'unité d'exploitation émet un signal d'avertissement si le degré de remplissage tombe en dessous d'une valeur seuil inférieure à 80 %, de préférence un degré de remplissage inférieur à 95 % du diamètre de tube, de préférence 98 % du diamètre de tube.

3. Système de surveillance de niveau selon la revendication 1 ou 2, **caractérisé en ce que** le système de surveillance de niveau comprend au moins un circuit pour appliquer une tension entre une première électrode (4, 24, 41, 51) et une deuxième électrode, une mise en contact intervenant entre les deux électrodes par l'intermédiaire du produit se trouvant dans la conduite, le capteur de température (5, 25) étant intégré dans la première électrode (4, 24, 41, 51) ou la deuxième électrode.

4. Système de surveillance de niveau selon la revendication 3, **caractérisé en ce que** la première et la deuxième électrode (4, 24, 41, 51) sont chacune équipées d'un capteur de température intégré (5, 25).

5. Système de surveillance de niveau selon l'une des revendications précédentes, **caractérisé en ce que** le capteur de température (5, 25) de l'électrode (4, 24, 41, 51) ou des électrodes est relié à une unité d'exploitation, laquelle est conçue pour déterminer la température du produit.

6. Système de surveillance de niveau selon au moins l'une des revendications précédentes, **caractérisé en ce que** la zone marginale (R) s'étend sur une section s'étendant radialement vers le centre (M) d'au moins 2 %, de préférence d'au moins 4 %, notamment d'au moins 10 %, du diamètre de la tête d'électrode (15, 35, 45, 55).

7. Système de surveillance de niveau selon au moins l'une des revendications précédentes, **caractérisé en ce que** le tracé de la face frontale (12, 32, 52) dans le sens radial vers le centre (M) atteint un point (P) à partir duquel se produit une augmentation dans la direction du produit d'un gradient positif, la distance (t) du point (P) par rapport au centre (M) dans la direction axiale longitudinale étant supérieure à l'épaisseur de paroi (u) de la face frontale de la tête d'électrode (12, 32, 52) [ou de la tête d'électrode (15, 35, 55)] le long de l'axe longitudinal (A) au centre (M) de l'électrode (4, 24, 51).

8. Système de surveillance de niveau selon l'une des revendications 1 à 6, **caractérisé en ce que** le tracé de la face frontale (12, 32, 52) dans le sens radial vers le centre (M) dans la direction du produit décrit d'abord un tracé convexe puis un tracé concave, la trajectoire concave présentant un sommet (P) et la distance (t) du point (P) par rapport au centre (M) dans la direction de l'axe longitudinal étant supérieure à l'épaisseur de paroi (u) de la tête d'électrode (15, 35, 55) le long de l'axe longitudinal (A) au centre (M) de l'électrode (4, 24, 51).

9. Système de surveillance de niveau selon l'une des revendications précédentes, **caractérisé en ce qu'**une section frontale de la tête d'électrode (15, 35, 55) est une partie en forme cylindrique (19, 39), dont la paroi cylindrique s'étend parallèlement à l'axe longitudinal de l'électrode (4, 24, 51).

10. Système de surveillance de niveau selon la revendication 3, **caractérisé en ce que** les capteurs de température (5, 25) des électrodes (4, 24, 41, 51) sont reliés à une unité d'exploitation, laquelle est conçue pour détecter les dépôts sur l'une des électrodes (4, 24, 41, 51).

11. Système de surveillance de niveau selon l'une des revendications précédentes, **caractérisé en ce que** l'unité d'exploitation comporte un élément d'affichage destiné à afficher la température du produit et/ou l'état du revêtement de l'électrode (4, 24, 41, 51) et/ou destiné à afficher l'état de remplissage du tube.

12. Système de surveillance de niveau selon l'une des revendications précédentes, **caractérisé en ce qu'**un premier segment partiel frontal de la tête d'électrode (12, 32, 42, 52) présente un revêtement (13, 33) électriquement isolant, et **en ce qu'**un deuxième segment partiel frontal de la tête d'électrode (12, 32, 42, 52) est conçu sans revêtement.

13. Débitmètre (1, 21) avec un tube de mesure (2, 22) et un dispositif destiné à la détermination de la vitesse d'écoulement et/ou du débit volumique d'un produit dans un tube de mesure (2, 22), **caractérisé en ce que** le débitmètre (1, 21) comprend un système de surveillance de niveau selon l'une des revendications 1 à 12, lequel système de surveillance de niveau comporte au moins une électrode (4, 24, 41, 51) avec un capteur de température (5, 25) intégré, laquelle électrode (4, 24, 41, 51) est disposée dans un tube de mesure (2, 22) ou dans un raccord process raccordé au tube de mesure (2, 22), laquelle électrode est notamment conçue pour la détermination de la température et du niveau du produit dans le tube de mesure (2, 22), le système de surveillance de niveau comportant une unité d'exploitation destinée à la surveillance du degré de remplissage du tube de mesure (2, 22) et laquelle unité d'exploitation émet un signal d'avertissement si le degré de remplissage tombe en dessous d'une valeur seuil, notamment un degré de remplissage inférieur à 55 % du diamètre de tube.

14. Débitmètre selon la revendication 13, **caractérisé en ce que** le débitmètre (1, 21) est conçu en tant que débitmètre magnéto-inductif (1, 21) et lequel débitmètre comporte deux électrodes de mesure (3, 23), notamment pour la mesure de débit, ainsi qu'une électrode supplémentaire (4, 24, 41, 51, 61) associée au système de surveillance de niveau.
